# EUROPEAN PATENT APPLICATION

(11) **EP 3 693 407 A1**
(43) Date of publication of application: **12.08.2020**
(21) Application number: 19156349.3
(22) Date of filing: 11.02.2019
(51) Int. Cl.: C08J 3/22, C08K 9/08, C09C 3/08, C09C 3/10, C09C 1/02, C08K 9/04

(54) **A SURFACE-TREATED FILLER MATERIAL PRODUCT PROVIDING IMPROVED UV STABILITY FOR POLYMERIC ARTICLES**

(71) Applicant: Omya International AG, 4665 Oftringen (CH)
(72) Inventor: WELKER, Matthias, 68220 Hésingue (FR); FORNERA, Tazio, 4800 Zofingen (CH); SCHULZ, Karsten Udo, 6010 Kriens (CH); RENTSCH, Samuel, 3095 Spiegel bei Bern (CH)
(74) Representative: Glas, Holger

(57) **Abstract**

The present invention relates to a surface-treated filler material product comprising filler material comprising at least one epoxy-functional compound having one or more epoxy group(s) and/or reaction products thereof, a process for preparing said surface-treated filler material product, a polymer composition comprising at least one polymeric resin and from 1 to 70 wt.-%, based on the total weight of the polymer composition, of said surface-treated filler material product, a polymeric article comprising said surface-treated filler material product and/or the polymer composition as well as the use of the surface-treated filler material product to reduce degradation of the mechanical properties in a polymeric article comprising the surface-treated filler material product when exposed to UV light.

## Description

The present invention relates to a surface-treated filler material product comprising filler material comprising at least one epoxy-functional compound having one or more epoxy group(s) and/or reaction products thereof, a process for preparing said surface-treated filler material product, a polymer composition comprising at least one polymeric resin and from 1 to 70 wt.-%, based on the total weight of the polymer composition, of said surface-treated filler material product, a polymeric article comprising said surface-treated filler material product and/or the polymer composition as well as the use of the surface-treated filler material product to reduce degradation of the mechanical properties in a polymeric article comprising the surface-treated filler material product when exposed to UV light.

Nowadays many products are made from plastic since this material has a low density and, therefore, is light, has a low thermal conductivity, is strong, easily processed and unbreakable. Polymers can be produced or obtained from different sources like from fossil fuels or from biopolymers and can be divided in thermoplastic, thermosetting and elastomeric materials. Known and mostly used polymers are, for example, polyethylene (PE), polypropylene (PP), polyvinylchloride (PVC), polybutyrate adipate terephthalate (PBAT), polyhydroxybutyrate (PHB) and polycaprolactone (PCL).

Furthermore, often particulate filler materials are incorporated in polymer materials in order to safe polymers and raw materials as well as in order to change the properties of the polymers. For example, by incorporating such filler materials less polymer is used and, therefore, the incorporation of filler materials in polymer compositions may lead to a reduction of polymer material. Thereby, the end price of the polymer product may be decreased. Furthermore, filler materials are often used to change and/or improve the properties of polymer material. For example, filler materials are added to change the colour of the polymer. Alternatively, filler materials are added with the aim of changing the chemical and mechanical properties of the polymer, for example, to change the softening temperature, the Young's modulus, impact strength or tensile strength.

As described above, filler materials are discrete particles that are added to polymer materials to lower the consumption of more expensive binder material or to improve some properties of the material. Among the most important filler materials, calcium carbonate-comprising filler materials hold the largest market volume and are mainly used in the plastics sector.

Polymer materials comprising filler materials such as calcium carbonate are described in a number of documents. For instance, WO 2013/190274 A2 refers to compositions comprising a polymer and a particulate mineral filler. The polymer can be polyhydroxybutyrate (PHB), and the particulate mineral filler comprises calcined clay promoting the biodegradability of such polymers.

WO 2015/185533 relates to a polymer composition comprising at least 20.0 wt.-%, based on the total weight of the polymer composition, of at least one biodegradable polymer resin, from 0.1 to 20.0 wt.-%, based on the total weight of the polymer composition, of at least one polyolefin selected from polyethylene and/or polypropylene and from 5.9 to 60.0 wt.-%, based on the total weight of the polymer composition, of an inorganic filler material dispersed in the at least one polyolefin and the at least one biodegradable polymer resin. The filler material may be an alkaline inorganic filler material.

WO 2010/001268 A2 refers to a bio-degradable packaging film, wherein the film includes a blend that comprises: at least one thermoplastic starch in an amount of from about 10 wt.% to about 60 wt.% of the blend, at least one polylactic acid in an amount of from about 1 wt.% to about 30 wt.% of the blend, at least one aliphatic-aromatic copolyester in an amount of from about 20 wt.% to about 70 wt.% of the blend, and at least one filler in an amount of from about 1 wt.% to about 25 wt.% of the blend, wherein the ratio of the total weight percentage of the aliphatic-aromatic copolyester and thermoplastic starch to the total weight percentage of the polylactic acid and filler is from about 1 to about 10.

WO 2014102197 A1 refers to a nonwoven fabric comprising at least one polymer comprising a polyester and at least one filler comprising calcium carbonate. WO 2014102197 A1 further relates to a process of producing such a nonwoven fabric as well as to the use of calcium carbonate as filler in a nonwoven fabric comprising at least one polymer comprising a polyester.

US 8901224 B2 refers to a process for producing a filled polymer material as well as to the filled polymer material. More precisely, a thermoplastic polymer material that is filled with at least one filler, preferably calcium carbonate CaCO₃ is disclosed that is sensitive to hydrolytic degradation and optionally hygroscopic.

A general disadvantage which is observed when calcium carbonate-comprising filler materials are incorporated in polymer compositions is that the UV stability is typically given only for filler material levels from 1 to 3 wt.-%, whereas in applications where no UV requirements must be met filler level of up to 20 wt.-% can be used. In principle, an increase in UV stability can be achieved by increasing the amount of UV and antioxidant additives. However, the high additive costs would cancel out the cost advantage of the increased filler load. Furthermore, such low filler levels affect adversely the chemical and mechanical properties of the polymer and thus are not desired.

Thus, there is still a need in the art for technical solutions which address the foregoing technical problems and which especially allow for improving the UV stability of a polymer composition comprising at least one polymer resin as polymer component and a calcium carbonate-comprising filler material as filler. In particular, there is still the need to provide a calcium carbonate-comprising filler material as filler which allows for improving the UV stability of a polymer composition comprising such a filler material in that the degradation of the mechanical properties such as tensile properties in a polymeric article comprising the filler material is reduced when exposed to UV light. Furthermore, there is still the need for a calcium carbonate-comprising filler material which allow for increasing the filler content in a polymer composition and at the same time provides high UV stability, i.e. a reduced degradation of the mechanical properties when exposed to UV light.

Accordingly, it is an objective of the present invention to provide a technical solution which addresses the above-mentioned problems and which especially improves the UV stability of a polymer composition comprising at least one polymer as polymer component and a calcium carbonate-comprising filler material as filler. Another objective of the present invention is to improve the UV stability of a polymer composition comprising a calcium carbonate-comprising filler material in that the degradation of the mechanical properties such as tensile properties in a polymeric article comprising the filler material is reduced when exposed to UV light. A further objective of the present invention is to increase the calcium carbonate-comprising filler material content in a polymer composition and at the same time to provide high UV stability, i.e. a reduced degradation of the mechanical properties when exposed to UV light.

The foregoing and other objectives are solved by the subject-matter as defined herein in claim 1.

Advantageous embodiments of the invention are defined in the corresponding subclaims.

According to one aspect of the present application, a surface-treated filler material product is provided. The surface-treated filler material product comprises
A) at least one calcium carbonate-comprising filler material having
   - a weight median particle size *d*₅₀ in the range from 0.1 µm to 7 µm,
   - a top cut particle size *d*₉₈ of ≤ 50 µm,
      and
B) a treatment layer on the surface of the at least one calcium carbonate-comprising filler material comprising at least one epoxy-functional compound having one or more epoxy group(s) and/or reaction products thereof,
   wherein the surface-treated filler material product comprises the treatment layer in an amount of from 0.1 to 3 wt.-%, based on the total dry weight of the at least one calcium carbonate-comprising filler material.

The inventors surprisingly found out that according to the present invention, the UV stability of a polymer composition comprising at least one polymer as polymer component and a calcium carbonate-comprising filler material as filler can be significantly improved, i.e. the degradation of the mechanical properties such as tensile properties in a polymeric article comprising the filler material is reduced when exposed to UV light, if the at least one calcium carbonate-comprising filler material comprises a treatment layer on its surface comprising at least one epoxy-functional compound having one or more epoxy group(s) and/or reaction products thereof. Furthermore, the inventors surprisingly found out that such a surface-treated filler material product allows for increasing the filler content in a polymer composition and at the same time provides high UV stability, i.e. a reduced degradation of the mechanical properties when exposed to UV light.

According to one embodiment of the present invention, the at least one calcium carbonate-comprising filler material is selected from the group consisting of ground calcium carbonate, preferably marble, limestone, and/or chalk, precipitated calcium carbonate (PCC), preferably vaterite, calcite and/or aragonite, surface-reacted calcium carbonate (MCC) and mixtures thereof, more preferably the calcium carbonate-comprising filler material is ground calcium carbonate.

According to another embodiment of the present invention, the at least one calcium carbonate-comprising filler material has a) a weight median particle size *d*₅₀ value in the range from 0.25 µm to 5 µm and most preferably from 0.5 µm to 4 µm, and/or b) a top cut (*d*₉₈) of ≤ 40 µm, more preferably ≤ 25 µm and most preferably ≤ 15 µm, and/or c) a specific surface area (BET) of from 0.5 to 150 m²/g, preferably from 0.5 to 50 m²/g, more preferably from 0.5 to 35 m²/g and most preferably from 0.5 to 10 m²/g, measured using nitrogen and the BET method according to ISO 9277.

According to yet another embodiment of the present invention, the at least one epoxy-functional compound having one or more epoxy group(s) is a compound selected from i) an epoxy-functional aliphatic linear or branched carboxylic acid having a total amount of carbon atoms from C8 to C24, preferably an epoxy-functional aliphatic linear or branched carboxylic acid having one to three epoxy group(s), and/or ii) an epoxy-functional triglyceride comprising derivatized linolenic acid such as α-linolenic acid or γ-linolenic acid, linoleic acid and/or oleic acid, preferably epoxy-functional triglyceride comprising derivatized linoleic acid.

According to one embodiment of the present invention, the at least one epoxy-functional compound having one or more epoxy group(s) is selected from epoxy-functional vegetable oils, such as epoxy-functional soybean oil or epoxy-functional linseed oil, epoxy-functional octyl tallate, epoxy-functional octadeca-7,9-dienoic acid and esters thereof, and mixtures thereof.

According to another embodiment of the present invention, the at least one epoxy-functional compound having one or more epoxy group(s) is selected from an epoxy-functional styrene-(meth)acrylic oligomer or polymer, an epoxy-functional ethylene-(meth)acrylic oligomer or polymer and 1,5-epoxy resins.

According to yet another embodiment of the present invention, the epoxy-functional styrene-(meth)acrylic oligomer or polymer i) is the polymerization product of (i) at least one epoxy-functional (meth)acrylic monomer; and (ii) at least one styrene monomer and optionally (meth)acrylic monomer, and/or ii) has an average number of three to five, preferably an average number of four, epoxy groups per oligomer or polymer chain, and/or iii) has an epoxy equivalent weight of from about 180 to about 2800 g/mol, and/or iv) a glass transition temperature Tg in the range from -50 to +60°C, and/or v) a molecular weight (Mw) in the range from 1 000 to 9 000 g/mol.

According to one embodiment of the present invention, the epoxy-functional ethylene-(meth)acrylic oligomer or polymer i) is the polymerization product of (i) at least one epoxy-functional (meth)acrylic monomer; and (ii) at least one ethylene monomer and optionally (meth)acrylic monomer, and/or ii) has a melting temperature Tm in the range from 25 to 50°C, and/or iii) comprises epoxy-functional (meth)acrylic monomers in an amount ranging from 4 to 18 wt.-%, preferably from 5 to 12 wt.-% and most preferably from 6 to 10 wt.-%, based on the total weight of the epoxy-functional ethylene-(meth)acrylic oligomer or polymer, and/or iv) comprises (meth)acrylic monomers in an amount ranging from 12 to 40 wt.-%, preferably from 15 to 38 wt.-% and most preferably from 18 to 25 wt.-%, based on the total weight of the epoxy-functional ethylene-(meth)acrylic oligomer or polymer.

According to another embodiment of the present invention, the treatment layer on the surface of the at least one calcium carbonate-comprising filler material further comprises at least one saturated aliphatic linear or branched carboxylic acid and/or reaction products thereof or at least one mono-substituted succinic anhydride and/or reaction products thereof.

According to another aspect of the present invention, a process for preparing a surface-treated filler material product as defined herein is provided. The process comprises at least the steps of:
a) providing at least one calcium carbonate-comprising filler material,
b) providing at least one epoxy-functional compound having one or more epoxy group(s),
c) contacting the surface of the at least one calcium carbonate-comprising filler material of step a), under mixing, in one or more steps, with the at least one epoxy-functional compound having one or more epoxy group(s) such that a treatment layer comprising the at least one epoxy-functional compound having one or more epoxy group(s) and/or reaction product(s) thereof is formed on the surface of said at least one calcium carbonate-comprising filler material of step a),
   wherein the temperature before and/or during contacting step c) is adjusted such that the at least one compound having one or more epoxy group(s) is in a molten or liquid state.

According to one embodiment of the present invention, the at least one calcium carbonate-comprising filler material of step a) is preheated before contacting step c) is carried out, preferably the at least one calcium carbonate-comprising filler material of step a) is preheated at a temperature of from 20 to 200°C, more preferably of from 40 to 200°C, even more preferably of from 50 to 180°C and most preferably of from 60 to 160°C.

According to another embodiment of the present invention, contacting step c) is carried out at a temperature of from 20 to 200°C, more preferably of from 40 to 200°C, even more preferably of from 50 to 180°C and most preferably of from 60 to 160°C.

According to yet another embodiment of the present invention, the process further comprises a step d) of contacting the at least one calcium carbonate-comprising filler material of step a), under mixing, before, during and/or after step c), preferably before step c), in one or more steps, with at least one saturated aliphatic linear or branched carboxylic acid or at least one mono-substituted succinic anhydride.

According to a further aspect of the present invention, a process for preparing a masterbatch or compound comprising the surface-treated filler material product as defined herein is provided. The process comprises at least the steps of mixing and/or kneading at least one polymeric resin, preferably selected from homopolymers and/or copolymers of polyolefins, more preferably polyethylene or polypropylene, and the surface-treated filler material product to form a mixture and continuously pelletizing the obtained mixture.

According to a still further aspect of the present invention, a polymer composition comprising at least one polymeric resin and from 1 to 70 wt.-%, preferably from 1 to 40 wt.-%, and most preferably from 1 to 20 wt.-%, based on the total weight of the polymer composition, of the surface-treated filler material product as defined herein.

According to one embodiment of the present invention, the at least one polymeric resin is selected from homopolymers and/or copolymers of polyolefins, preferably polyethylene or polypropylene.

According to another aspect of the present invention, a polymeric article, preferably processed by extrusion process, co-extrusion process, blown film extrusion process, cast film extrusion, tape extrusion process or sheet extrusion process, extrusion coating process, injection molding process, blow molding process, thermoforming process, or rotomolding, comprising the surface-treated filler material product according as defined herein and/or a polymer composition as defined herein is provided.

According to a further aspect, the use of the surface-treated filler material product as defined herein to reduce degradation of the mechanical properties in a polymeric article comprising the surface-treated filler material product when exposed to UV light is provided.

It should be understood that for the purposes of the present invention, the following terms have the following meanings:
For the purpose of the present invention, the term "filler material" in the meaning of the present application refers to filler material-containing particles being water insoluble. The term "water insoluble" refers to a solubility of the filler material-containing particles in water at 20 °C (± 2 °C) of < 0.1 wt.-%, based on the total dry weight of the inorganic filler material.

The term "surface-treated" filler material product in the meaning of the present invention refers to a calcium carbonate-comprising filler material which has been contacted with a surface treatment agent such as to obtain a treatment layer located on at least a part of the surface of the calcium carbonate-comprising filler material. Accordingly, the term "treatment layer" refers to a layer comprising the surface treatment agent and/or reaction products thereof on at least a part of the surface of the calcium carbonate-comprising filler material.

The term "reaction products" in the meaning of the present invention refers to products obtained by contacting the at least one calcium carbonate-comprising filler material with at least one epoxy-functional compound having one or more epoxy group(s). That is to say, the at least one epoxy-functional compound having one or more epoxy group(s) may be present in the treatment layer on the surface of the at least one calcium carbonate-comprising filler material as a compound having less epoxy group(s) than the at least one epoxy-functional compound having one or more epoxy group(s) applied for preparing the surface-treated filler material product. The term "dry" calcium carbonate-comprising filler material is understood to be a filler material having less than 0.3 % by weight of water relative to the filler material weight. The % water (equal to residual total moisture content) is determined according to the Coulometric Karl Fischer measurement method, wherein the filler material is heated to 220 °C, and the water content released as vapour and isolated using a stream of nitrogen gas (at 100 ml/min) is determined in a Coulometric Karl Fischer unit.

The "particle size" of particulate materials, for example the calcium carbonate-comprising filler material herein, is described by its distribution of particle sizes *dₓ*. Therein, the value *dₓ* represents the diameter relative to which *x* % by weight of the particles have diameters less than *dₓ*. This means that, for example, the *d*₂₀ value is the particle size at which 20 wt.-% of all particles are smaller than that particle size. The *d*₅₀ value is thus the weight median particle size, i.e. 50 wt.-% of all grains are bigger and the remaining 50 wt.-% are smaller than this particle size. For the purpose of the present invention the particle size is specified as weight median particle size *d*₅₀ unless indicated otherwise. The *d*₉₈ value is the particle size at which 98 wt.-% of all particles are smaller than that particle size. The *d*₉₈ value is also designated as "top cut". Particle sizes were determined by using a Sedigraph™5100 or 5120 instrument of Micromeritics Instrument Corporation. The method and the instrument are known to the skilled person and are commonly used to determine the particle size of fillers and pigments. The measurements were carried out in an aqueous solution of 0.1 wt.-% Na₄P₂O₇. The samples were dispersed using a high speed stirrer and sonicated.

Where the term "comprising" is used in the present description and claims, it does not exclude other non-specified elements of major or minor functional importance. For the purposes of the present invention, the term "consisting of' is considered to be a preferred embodiment of the term "comprising of'. If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

In the following the details and preferred embodiments of the inventive surface-treated filler material product as claimed in claim 1 will be set out in more detail.

The surface-treated filler material product comprises
A) at least one calcium carbonate-comprising filler material having
   - a weight median particle size *d*₅₀ in the range from 0.1 µm to 7 µm,
   - a top cut particle size *d*₉₈ of ≤ 50 µm,
      and
B) a treatment layer on the surface of the at least one calcium carbonate-comprising filler material comprising at least one epoxy-functional compound having one or more epoxy group(s) and/or reaction products thereof,
wherein the surface-treated filler material product comprises the treatment layer in an amount of from 0.1 to 3 wt.-%, based on the total dry weight of the at least one calcium carbonate-comprising filler material.

The at least one calcium carbonate-comprising filler material in the meaning of the present invention refers to a filler material selected from the group consisting of ground (or natural) calcium carbonate (GCC), precipitated calcium carbonate (PCC), surface-reacted calcium carbonate (MCC) and mixtures thereof.

GCC is understood to be a naturally occurring form of calcium carbonate, mined from sedimentary rocks such as limestone or chalk, or from metamorphic marble rocks and processed through a treatment such as grinding, screening and/or fractionizing in wet and/or dry form, for example by a cyclone or classifier. In one embodiment of the present invention, the GCC is selected from the group comprising marble, chalk, limestone and mixtures thereof.

By contrast, calcium carbonate of the PCC type include synthetic calcium carbonate products obtained by carbonation of a slurry of calcium hydroxide, commonly referred to in the art as a slurry of lime or milk of lime when derived from finely divided calcium oxide particles in water or by precipitation out of an ionic salt solution. PCC may be rhombohedral and/or scalenohedral and/or aragonitic; preferred synthetic calcium carbonate or precipitated calcium carbonate comprising aragonitic, vateritic or calcitic mineralogical crystal forms or mixtures thereof.

"Surface-reacted calcium carbonate" in the meaning of the present invention may feature a natural ground or precipitated calcium carbonate with an internal structure modification or a surface-reaction product. According to a preferred embodiment of the present invention, the modified calcium carbonate is a surface-reacted calcium carbonate.

In one preferred embodiment, the at least one calcium carbonate-comprising filler material is ground calcium carbonate. More preferably, the at least one calcium carbonate-comprising filler material is marble.

It is appreciated that the amount of calcium carbonate in the at least one calcium carbonate-comprising filler material is at least 80 wt.-%, e.g. at least 95 wt.-%, preferably between 97 and 100 wt.-%, more preferably between 98.5 and 99.95 wt.-%, based on the total dry weight of the at least one calcium carbonate-comprising filler material.

The at least one calcium carbonate-comprising filler material is preferably in the form of a particulate material, and may have a particle size distribution as conventionally employed for the material(s) involved in the type of product to be produced. In general, it is one specific requirement of the present invention that the at least one calcium carbonate-comprising filler material has a weight median particle size *d*₅₀ value in the range from 0.1 to 7 µm. For example, the at least one calcium carbonate-comprising filler material has a weight median particle size *d*₅₀ from 0.25 µm to 5 µm and preferably from 0.5 µm to 4 µm.

A further requirement of the present invention is that the at least one calcium carbonate-comprising filler material has a top cut (*d*₉₈) of ≤ 50 µm. For example, the at least one calcium carbonate-comprising filler material has a top cut (*d*₉₈) of ≤ 40 µm, preferably of ≤ 25 µm and most preferably of ≤ 15 µm.

It is further appreciated that the at least calcium carbonate-comprising filler material preferably has a BET specific surface area of from 0.5 and 150 m²/g as measured by the BET nitrogen method according to ISO 9277. For example, the at least one calcium carbonate-comprising filler material has a specific surface area (BET) of from 0.5 to 50 m²/g, more preferably of from 0.5 to 35 m²/g and most preferably of from 0.5 to 10 m²/g as measured by the BET nitrogen method according to ISO 9277.

In one embodiment of the present invention, the at least one calcium carbonate-comprising filler material is preferably a ground calcium carbonate, more preferably marble, having a median particle size diameter *d*₅₀ value from 0.1 µm to 7 µm, preferably from 0.25 µm to 5 µm and most preferably from 0.5 µm to 4 µm, and a top cut (*d*₉₈) of ≤ 50 µm, preferably of ≤ 40 µm, preferably of ≤ 25 µm and most preferably of ≤ 15 µm. In this case, the at least one calcium carbonate-comprising filler material exhibits a BET specific surface area of from 0.5 to 150 m²/g, preferably of from 0.5 to 50 m²/g, more preferably of from 0.5 to 35 m²/g and most preferably of from 0.5 to 10 m²/g, measured using nitrogen and the BET method according to ISO 9277.

It is preferred that the at least one calcium carbonate-comprising filler material is a dry ground material, a material being wet ground and dried or a mixture of the foregoing materials. In general, the grinding step can be carried out with any conventional grinding device, for example, under conditions such that refinement predominantly results from impacts with a secondary body, i.e. in one or more of: a ball mill, a rod mill, a vibrating mill, a roll crusher, a centrifugal impact mill, a vertical bead mill an attrition mill, a pin mill, a hammer mill, a pulveriser, a shredder, a de-clumper, a knife cutter, or other such equipment known to the skilled man.

In case the at least one calcium carbonate-comprising filler material is a wet ground calcium carbonate-comprising filler material, the grinding step may be performed under conditions such that autogenous grinding takes place and/or by horizontal ball milling, and/or other such processes known to the skilled man. The wet processed ground calcium carbonate-comprising filler material thus obtained may be washed and dewatered by well known processes, e.g. by flocculation, filtration or forced evaporation prior to drying. The subsequent step of drying may be carried out in a single step such as spray drying, or in at least two steps, e.g. by applying a first heating step to the calcium carbonate-comprising filler material in order to reduce the associated moisture content to a level which is not greater than about 0.5 wt.-%, based on the total dry weight of the at least one calcium carbonate-comprising filler material. The residual total moisture content of the filler can be measured by the Karl Fischer coulometric titration method, desorbing the moisture in an oven at 195°C and passing it continuously into the KF coulometer (Mettler Toledo coulometric KF Titrator C30, combined with Mettler oven DO 0337) using dry N₂ at 100 ml/min for 10 min. The residual total moisture content can be determined with a calibration curve and also a blind of 10 min gas flow without a sample can be taken into account. The residual total moisture content may be further reduced by applying a second heating step to the at least one calcium carbonate-comprising filler material. In case said drying is carried out by more than one drying steps, the first step may be carried out by heating in a hot current of air, while the second and further drying steps are preferably carried out by an indirect heating in which the atmosphere in the corresponding vessel comprises a surface treatment agent. It is also common that the at least one calcium carbonate-comprising filler material is subjected to a beneficiation step (such as a flotation, bleaching or magnetic separation step) to remove impurities.

In one embodiment of the present invention, the at least one calcium carbonate-comprising filler material is a dry ground calcium carbonate. In another preferred embodiment, the at least one calcium carbonate-comprising filler material is a material being wet ground in a horizontal ball mill, and subsequently dried by using the well known process of spray drying.

Depending on the at least one calcium carbonate-comprising filler material, the at least one calcium carbonate-comprising filler material has a residual total moisture content of from 0.01 to 1 wt.-%, preferably from 0.01 to 0.2 wt.-%, more preferably from 0.02 to 0.15 wt.-% and most preferably from 0.04 to 0.15 wt.-%, based on the total dry weight of the at least one calcium carbonate-comprising filler material.

For example, in case a wet ground and spray dried marble is used as the at least one calcium carbonate-comprising filler material, the residual total moisture content of the at least one calcium carbonate-comprising filler material is preferably of from 0.01 to 0.1 wt.-%, more preferably from 0.02 to 0.08 wt.-% and most preferably from 0.04 to 0.07 wt.-% based on the total dry weight of the at least one calcium carbonate-comprising filler material. If a PCC is used as the at least one calcium carbonate-comprising filler material, the residual total moisture content of the at least one calcium carbonate-comprising filler material is preferably of from 0.01 to 0.2 wt.-%, more preferably from 0.05 to 0.17 wt.-% and most preferably from 0.05 to 0.10 wt.-%, based on the total dry weight of the at least one calcium carbonate-comprising filler material.

Preferably, the at least one calcium carbonate-comprising filler material is a dry ground calcium carbonate.

In accordance with the present invention, the surface-treated filler material product comprises a treatment layer located on the surface of the at least one calcium carbonate-comprising filler material. It is one specific requirement of the present invention that the treatment layer located on the surface of the at least one calcium carbonate-comprising filler material comprises at least one epoxy-functional compound having one or more epoxy group(s) and/or reaction products thereof.

Thus, it is appreciated that the surface-treated filler material product comprises, preferably consists of, at least one calcium carbonate-comprising filler material and at least one epoxy-functional compound having one or more epoxy group(s) and/or reaction products thereof.

It is one further requirement of the present invention that the surface-treated filler material product comprises the treatment layer comprising, preferably consisting of, at least one epoxy-functional compound having one or more epoxy group(s) and/or reaction products thereof, in an amount of from 0.1 to 3.0 wt.-%, based on the total dry weight of the calcium carbonate-comprising filler material. For example, the surface-treated filler material product comprises the treatment layer comprising, preferably consisting of, at least one epoxy-functional compound having one or more epoxy group(s) and/or reaction products thereof, in an amount of from 0.2 to 2.8 wt.-% and preferably of from 0.3 to 2.5 wt.-%, based on the total dry weight of the calcium carbonate-comprising filler material.

The term "reaction products" of the at least one epoxy-functional compound having one or more epoxy group(s) in the meaning of the present invention refers to products obtained by contacting the at least one calcium carbonate-comprising filler material with the at least one epoxy-functional compound having one or more epoxy group(s). Said reaction products are formed between at least a part of the applied at least one epoxy-functional compound having one or more epoxy group(s) and reactive molecules located at the surface of the at least one calcium carbonate-comprising filler material.

In one embodiment, the treatment layer on the surface of the surface-treated filler material product comprises, preferably consists of, the at least one epoxy-functional compound having one or more epoxy group(s) and reaction products thereof. Alternatively, the treatment layer on the surface of the surface-treated filler material product comprises, preferably consists of, the at least one epoxy-functional compound having one or more epoxy group(s) or reaction products thereof, preferably reaction products of the at least one epoxy-functional compound having one or more epoxy group(s).

It is appreciated that the expression "at least one" epoxy-functional compound having one or more epoxy group(s) means that one or more kinds of epoxy-functional compound(s) having one or more epoxy group(s) may be present in the treatment layer.

Accordingly, it should be noted that the at least one epoxy-functional compound having one or more epoxy group(s) can be one kind of epoxy-functional compound having one or more epoxy group(s). Alternatively, the at least one epoxy-functional compound having one or more epoxy group(s) can be a mixture of two or more kinds of epoxy-functional compounds having one or more epoxy group(s). For example, the at least one epoxy-functional compound having one or more epoxy group(s) is a mixture of two or three kinds of epoxy-functional compounds having one or more epoxy group(s), like two kinds of epoxy-functional compounds having one or more epoxy group(s).

In one embodiment of the present invention, the at least one epoxy-functional compound having one or more epoxy group(s) is one kind of epoxy-functional compound having one or more epoxy group(s).

It is preferred that the at least one epoxy-functional compound having one or more epoxy group(s) is a compound selected from i) an epoxy-functional aliphatic linear or branched carboxylic acid having a total amount of carbon atoms from C8 to C24, preferably an epoxy-functional aliphatic linear or branched carboxylic acid having one to three epoxy group(s), and/or ii) an epoxy-functional triglyceride comprising derivatized linolenic acid such as α-linolenic acid or γ-linolenic acid, linoleic acid and/or oleic acid, preferably epoxy-functional triglyceride comprising derivatized linoleic acid.

In one embodiment, the at least one epoxy-functional compound having one or more epoxy group(s) is a compound selected from i) an epoxy-functional aliphatic linear or branched carboxylic acid having a total amount of carbon atoms from C8 to C24, preferably an epoxy-functional aliphatic linear or branched carboxylic acid having one to three epoxy group(s), or ii) an epoxy-functional triglyceride comprising derivatized linolenic acid such as α-linolenic acid or γ-linolenic acid, linoleic acid and/or oleic acid, preferably epoxy-functional triglyceride comprising derivatized linoleic acid. Alternatively, the at least one epoxy-functional compound having one or more epoxy group(s) is a compound selected from i) an epoxy-functional aliphatic linear or branched carboxylic acid having a total amount of carbon atoms from C8 to C24, preferably an epoxy-functional aliphatic linear or branched carboxylic acid having one to three epoxy group(s), and ii) an epoxy-functional triglyceride comprising derivatized linolenic acid such as α-linolenic acid or γ-linolenic acid, linoleic acid and/or oleic acid, preferably epoxy-functional triglyceride comprising derivatized linoleic acid.

For example, the epoxy-functional compound having one or more epoxy group(s) is an epoxy-functional aliphatic linear or branched carboxylic acid having a total amount of carbon atoms from C8 to C24. Preferably, the epoxy-functional compound having one or more epoxy group(s) is an epoxy-functional aliphatic linear or branched carboxylic acid having a total amount of carbon atoms from C12 to C24, more preferably from C14 to C22, even more preferably from C16 to C22 and most preferably C18 or C20.

Preferably, the epoxy-functional compound having one or more epoxy group(s) is an epoxy-functional aliphatic linear or branched carboxylic acid having one to three epoxy group(s).

It is appreciated that the number of epoxy group(s) in the epoxy-functional compound typically depends on the number of carbon-carbon double bonds that are available for epoxidation in the compound used to prepare the epoxy-functional compound. Thus, the epoxy-functional compound having one or more epoxy group(s) is at least partially epoxidized. More precisely, the epoxy-functional compound having one or more epoxy group(s) is partially or fully epoxidized. For example, the epoxy-functional compound having one or more epoxy group(s) is fully epoxidized.

For example, the epoxy-functional compound is prepared through the epoxidation of linolenic acid such as α-linolenic acid or γ-linolenic acid, linoleic acid and/or oleic acid such that the epoxy-functional compound is an epoxidized linolenic acid such as α-linolenic acid or γ-linolenic acid, linoleic acid and/or oleic acid. Preferably, the epoxy-functional compound is fully epoxidized linoleic acid.

Preferably, the epoxy-functional compound is an epoxy-functional triglyceride comprising derivatized, i.e. epoxidized, linolenic acid such as α-linolenic acid or γ-linolenic acid, linoleic acid and/or oleic acid. More preferably, the epoxy-functional compound is an epoxy-functional triglyceride comprising derivatized, i.e. epoxidized, linolenic acid such as α-linolenic acid or γ-linolenic acid and linoleic acid and/or oleic acid. For example, the epoxy-functional compound is an epoxy-functional triglyceride comprising derivatized, i.e. epoxidized, linolenic acid such as α-linolenic acid or γ-linolenic acid and linoleic acid or oleic acid.

In one embodiment, the epoxy-functional compound is an epoxy-functional triglyceride comprising derivatized, i.e. epoxidized, linoleic acid. Preferably, the epoxy-functional compound is an epoxy-functional triglyceride comprising fully derivatized, i.e. epoxidized, linoleic acid.

It is further preferred that the at least one epoxy-functional compound having one or more epoxy group(s) is selected from epoxy-functional vegetable oils, epoxy-functional octyl tallate, epoxy-functional octadeca-7,9-dienoic acid and esters thereof, and mixtures thereof.

Preferably, the epoxy-functional vegetable oil may be selected from epoxy-functional soybean oil and/or epoxy-functional linseed oil, more preferably epoxy-functional soybean oil, e.g. epoxy-functional soybean oil that is partially or fully epoxidized. Most preferably, the epoxy-functional vegetable oil is epoxy-functional soybean oil that is fully epoxidized.

Alternatively, the at least one epoxy-functional compound having one or more epoxy group(s) is selected from an epoxy-functional styrene-(meth)acrylic oligomer or polymer, an epoxy-functional ethylene-(meth)acrylic oligomer or polymer and 1,5-epoxy resins.

It is appreciated that the epoxy-functional compound having one or more epoxy group(s) being an epoxy-functional styrene-(meth)acrylic oligomer or polymer or an epoxy-functional ethylene-(meth)acrylic oligomer or polymer is preferably the polymerization product of i) at least one epoxy-functional (meth)acrylic monomer(s) and ii) at least one styrene or ethylene monomer(s) and optionally (meth)acrylic monomer(s).

In one embodiment, the at least one epoxy-functional compound having one or more epoxy group(s) is an epoxy-functional styrene-(meth)acrylic oligomer or polymer. That is to say, the epoxy-functional styrene-(meth)acrylic oligomer or polymer is the polymerization product of i) at least one epoxy-functional (meth)acrylic monomer(s) and ii) at least one styrene monomer(s) and optionally (meth)acrylic monomer(s). For example, the epoxy-functional styrene-(meth)acrylic oligomer or polymer is the polymerization product of i) at least one epoxy-functional (meth)acrylic monomer(s) and ii) at least one styrene monomer(s) and (meth)acrylic monomer(s).

The epoxy-functional styrene-(meth)acrylic oligomer or polymer is preferably an epoxy-functional styrene-(meth)acrylic oligomer.

In one embodiment, the epoxy-functional styrene-(meth)acrylic oligomer or polymer has a molecular weight (Mw) in the range from 1 000 to 9 000 g/mol, preferably from 2 000 to 9 000 g/mol, even more preferably from 3 000 to 8 000 g/mol, and most preferably from 4 000 to 8 000 g/mol.

Additionally or alternatively, the epoxy-functional styrene-(meth)acrylic oligomer or polymer has a glass transition temperature Tg in the range from -50 to +60°C, preferably from -25 to +60°C, more preferably from 0 to +60°C, and most preferably from +25 to 60°C.

For example, the epoxy-functional styrene-(meth)acrylic oligomer or polymer has a molecular weight (Mw) in the range from 1 000 to 9 000 g/mol, preferably from 2 000 to 9 000 g/mol, even more preferably from 3 000 to 8 000 g/mol, and most preferably from 4 000 to 8 000 g/mol, and a glass transition temperature Tg in the range from -50 to +60°C, preferably from -25 to +60°C, more preferably from 0 to +60°C, and most preferably from +25 to 60°C.

The epoxy-functional styrene-(meth)acrylic oligomer or polymer preferably has an average number of three to five epoxy groups per oligomer or polymer chain. For example, the epoxy-functional styrene-(meth)acrylic oligomer or polymer preferably has an average number of four epoxy groups per oligomer or polymer chain.

Additionally or alternatively, the epoxy-functional styrene-(meth)acrylic oligomer or polymer has an epoxy equivalent weight of from about 180 to about 2 800 g/mol, preferably from 180 to about 1 800 g/mol, more preferably from 180 to about 1 200 g/mol, and most preferably from 180 to about 600 g/mol.

It is further preferred that the epoxy-functional styrene-(meth)acrylic oligomer or polymer has an average number of three to five, preferably an average number of four, epoxy groups per oligomer or polymer chain, and an epoxy equivalent weight of from about 180 to about 2800 g/mol, preferably from 180 to about 1 800 g/mol, more preferably from 180 to about 1 200 g/mol, and most preferably from 180 to about 600 g/mol.

In one embodiment, the epoxy-functional styrene-(meth)acrylic oligomer or polymer has a molecular weight (Mw) in the range from 1 000 to 9 000 g/mol, preferably from 2 000 to 9 000 g/mol, even more preferably from 3 000 to 8 000 g/mol, and most preferably from 4 000 to 8 000 g/mol, and an average number of three to five, preferably an average number of four, epoxy groups per oligomer or polymer chain, and an epoxy equivalent weight of from about 180 to about 2800 g/mol, preferably from 180 to about 1 800 g/mol, more preferably from 180 to about 1 200 g/mol, and most preferably from 180 to about 600 g/mol.

Alternatively, the at least one epoxy-functional compound having one or more epoxy group(s) is an epoxy-functional ethylene-(meth)acrylic oligomer or polymer.

That is to say, the epoxy-functional ethylene-(meth)acrylic oligomer or polymer is the polymerization product of i) at least one epoxy-functional (meth)acrylic monomer(s) and ii) at least one ethylene monomer(s) and optionally (meth)acrylic monomer(s). For example, the epoxy-functional ethylene-(meth)acrylic oligomer or polymer is the polymerization product of i) at least one epoxy-functional (meth)acrylic monomer(s) and ii) at least one ethylene monomer(s) and (meth)acrylic monomer(s).

The epoxy-functional ethylene-(meth)acrylic oligomer or polymer is preferably an epoxy-functional ethylene-(meth)acrylic oligomer.

In one embodiment, the epoxy-functional ethylene-(meth)acrylic oligomer or polymer has a molecular weight (Mw) in the range from 1 000 to 16 000 g/mol, preferably from 2 000 to 14 000 g/mol, even more preferably from 3 000 to 12 000 g/mol, and most preferably from 4 000 to 9 000 g/mol.

Additionally or alternatively, the epoxy-functional ethylene-(meth)acrylic oligomer or polymer has a melting temperature Tm in the range from 25 to 50°C.

For example, the epoxy-functional ethylene-(meth)acrylic oligomer or polymer has a molecular weight (Mw) in the range from 1 000 to 16 000 g/mol, preferably from 2 000 to 14 000 g/mol, even more preferably from 3 000 to 12 000 g/mol, and most preferably from 4 000 to 9 000 g/mol, and a melting temperature Tm in the range from 25 to 50°C.

The epoxy-functional ethylene-(meth)acrylic oligomer or polymer preferably comprises (meth)acrylic monomers in an amount ranging from 12 to 40 wt.-%, preferably from 15 to 38 wt.-% and most preferably from 18 to 25 wt.-%, based on the total weight of the epoxy-functional ethylene-(meth)acrylic oligomer or polymer.

Additionally or alternatively, the epoxy-functional ethylene-(meth)acrylic oligomer or polymer comprises epoxy-functional (meth)acrylic monomers in an amount ranging from 4 to 18 wt.-%, preferably from 5 to 12 wt.-% and most preferably from 6 to 10 wt.-%, based on the total weight of the epoxy-functional ethylene-(meth)acrylic oligomer or polymer.

In one embodiment, epoxy-functional ethylene-(meth)acrylic oligomer or polymer preferably comprises (meth)acrylic monomers in an amount ranging from 12 to 40 wt.-%, preferably from 15 to 38 wt.-% and most preferably from 18 to 25 wt.-%, based on the total weight of the epoxy-functional ethylene-(meth)acrylic oligomer or polymer, and further comprises epoxy-functional (meth)acrylic monomers in an amount ranging from 4 to 18 wt.-%, preferably from 5 to 12 wt.-% and most preferably from 6 to 10 wt.-%, based on the total weight of the epoxy-functional ethylene-(meth)acrylic oligomer or polymer.

Alternatively, the at least one epoxy-functional compound having one or more epoxy group(s) is a 1,5-epoxy resin. Such resins are available from a great variety of sources, e.g. as CHS-EPOXY 171 of Spolchemie.

For example, the 1,5-epoxy resin has an epoxy equivalent weight of from about 180 to about 2 800 g/mol, preferably from 180 to about 1 800 g/mol, more preferably from 180 to about 1 200 g/mol, and most preferably from 400 to about 800 g/mol.

Additionally or alternatively, the 1,5-epoxy resin has a softening point measured according to the ring and ball method (ISO 4625) from 50 to 150°C, preferably from 60 to 120°C, more preferably from 70 to 100°C, and most preferably from 70 to 90°C.

In one embodiment, the treatment layer on the surface of the at least one calcium carbonate-comprising filler material further comprises at least one saturated aliphatic linear or branched carboxylic acid and/or reaction products thereof or at least one mono-substituted succinic anhydride and/or reaction products thereof. That is to say, the treatment layer on the surface of the at least one calcium carbonate-comprising filler material comprises at least one epoxy-functional compound having one or more epoxy group(s) and/or reaction products thereof and at least one saturated aliphatic linear or branched carboxylic acid and/or reaction products thereof or at least one mono-substituted succinic anhydride and/or reaction products thereof.

Preferably, the treatment layer on the surface of the at least one calcium carbonate-comprising filler material comprises at least one epoxy-functional compound having one or more epoxy group(s) and/or reaction products thereof and at least one saturated aliphatic linear or branched carboxylic acid and/or reaction products thereof.

For example, the treatment layer further comprises at least one saturated aliphatic linear or branched carboxylic acid and/or reaction products thereof.

The term "reaction products" of the saturated aliphatic linear or branched carboxylic acid in the meaning of the present invention refers to products obtained by contacting the at least one calcium carbonate-comprising filler material with the at least one saturated aliphatic linear or branched carboxylic acid. Said reaction products are formed between at least a part of the applied at least one saturated aliphatic linear or branched carboxylic acid and reactive molecules located at the surface of the at least one calcium carbonate-comprising filler material.

The aliphatic carboxylic acid in the meaning of the present invention may be selected from one or more linear chain, branched chain, saturated, unsaturated and/or alicyclic carboxylic acids. Preferably, the aliphatic carboxylic acid is a monocarboxylic acid, i.e. the aliphatic carboxylic acid is characterized in that a single carboxyl group is present. Said carboxyl group is placed at the end of the carbon skeleton.

Preferably, the at least one saturated aliphatic linear or branched carboxylic acid is preferably a saturated aliphatic linear or branched carboxylic acid having a total amount of carbon atoms from C4 to C24.

In one embodiment of the present invention, the aliphatic linear or branched carboxylic acid is selected from saturated unbranched carboxylic acids, that is to say the aliphatic carboxylic acid is preferably selected from the group of carboxylic acids consisting of pentanoic acid, hexanoic acid, heptanoic acid, octanoic acid, nonanoic acid, decanoic acid, undecanoic acid, lauric acid, tridecanoic acid, myristic acid, pentadecanoic acid, palmitic acid, heptadecanoic acid, stearic acid, nonadecanoic acid, arachidic acid, heneicosylic acid, behenic acid, tricosylic acid, lignoceric acid and mixtures thereof.

In another embodiment of the present invention, the aliphatic linear or branched carboxylic acid is selected from the group consisting of octanoic acid, decanoic acid, lauric acid, myristic acid, palmitic acid, stearic acid, arachidic acid and mixtures thereof. Preferably, the aliphatic linear or branched carboxylic acid is selected from the group consisting of octanoic acid, myristic acid, palmitic acid, stearic acid and mixtures thereof.

For example, the aliphatic linear or branched carboxylic acid is octanoic acid or stearic acid. Preferably, the aliphatic linear or branched carboxylic acid is stearic acid.

In one embodiment, the molar ratio of the at least one saturated aliphatic linear or branched carboxylic acid to the reaction product(s) thereof is from 99.9:0.1 to 0.1:99.9, preferably from 70:30 to 90:10.

The wording "molar ratio of the at least one saturated aliphatic linear or branched carboxylic acid to the reaction product(s) thereof' in the meaning of the present invention refers to the sum of the molecular weight of the saturated aliphatic linear or branched carboxylic acid to the sum of the molecular weight of the saturated aliphatic linear or branched carboxylic acid in the reaction products.

According to another embodiment of the present invention, the treatment layer on the surface of the at least one calcium carbonate-comprising filler material further comprises at least one mono-substituted succinic anhydride and/or reaction products thereof.

The term "succinic anhydride", also called dihydro-2,5-furandione, succinic acid anhydride or succinyl oxide, has the molecular formula C₄H₄O₃ and is the acid anhydride of succinic acid.

The term "mono-substituted" succinic anhydride in the meaning of the present invention refers to a succinic anhydride wherein a hydrogen atom is substituted by another substituent.

The term "mono-substituted" succinic acid in the meaning of the present invention refers to a succinic acid wherein a hydrogen atom is substituted by another substituent.

The term "reaction products" of the at least one mono-substituted succinic anhydride refers to products obtained by contacting the at least one calcium carbonate-comprising filler material with one or more mono-substituted succinic anhydride(s). Said reaction products are formed between the mono-substituted succinic acid which is formed from the applied mono-substituted succinic anhydride and reactive molecules located at the surface of the at least one calcium carbonate-comprising filler material. Alternatively, said reaction products are formed between the mono-substituted succinic acid, which may optionally be present with the at least one mono-substituted succinic anhydride, and reactive molecules located at the surface of the at least one calcium carbonate-comprising filler material.

For example, the treatment layer on the surface of the at least one calcium carbonate-comprising filler material further comprises at least one mono-substituted succinic anhydride consisting of succinic anhydride mono-substituted with a group selected from a linear, branched, aliphatic and cyclic group having a total amount of carbon atoms from at least C₂ to C₃₀ in the substituent and/or reaction products thereof. More preferably, the treatment layer on the surface of the at least one calcium carbonate-comprising filler material further comprises at least one mono-substituted succinic anhydride consisting of succinic anhydride mono-substituted with a group selected from a linear, branched, aliphatic and cyclic group having a total amount of carbon atoms from at least C₃ to C₃₀, even more preferably from at least C₃ to C₂₀ and most preferably from C₄ to C₁₈ in the substituent and/or reaction products thereof.

More precisely, the treatment layer on the surface of the at least one calcium carbonate-comprising filler material further comprises at least one mono-substituted succinic anhydride consisting of succinic anhydride mono-substituted with a group being a linear and aliphatic group having a total amount of carbon atoms from at least C₂ to C₃₀, preferably from at least C₃ to C₃₀, more preferably from at least C₃ to C₂₀ and most preferably from C₄ to C₁₈ in the substituent and/or reaction products thereof. Additionally or alternatively, the treatment layer on the surface of the at least one calcium carbonate-comprising filler material further comprises at least one mono-substituted succinic anhydride consisting of succinic anhydride mono-substituted with a group being a branched and aliphatic group having a total amount of carbon atoms from at least C₃ to C₃₀, preferably from at least C₄ to C₃₀, more preferably from at least C₄ to C₂₀ and most preferably from C₄ to C₁₈ in the substituent and/or reaction products thereof. Additionally or alternatively, the treatment layer on the surface of the at least one ground calcium carbonate-comprising filler material further comprises at least one mono-substituted succinic anhydride consisting of succinic anhydride mono-substituted with a group being an aliphatic and cyclic group having a total amount of carbon atoms from at least C₅ to C₃₀, preferably from at least C₅ to C₂₀ and most preferably from C₅ to C₁₈ in the substituent and/or reaction products thereof.

Methods for preparing surface-treated filler material products treated with at least one mono-substituted succinic anhydride consisting of succinic anhydride mono-substituted with a group selected from a linear, branched, aliphatic and cyclic group having a total amount of carbon atoms from at least C₂ to C₃₀ in the substituent and suitable compounds for coating are described e.g. in WO 2016/023937 A1, which is thus incorporated herewith by reference.

It is preferred that the surface-treated filler material product is in form of a powder.

According to another aspect of the present invention a process for preparing the surface-treated filler material product as defined herein is provided. The process comprises at least the steps of:
a) providing at least one calcium carbonate-comprising filler material,
b) providing at least one epoxy-functional compound having one or more epoxy group(s),
c) contacting the surface of the at least one calcium carbonate-comprising filler material of step a), under mixing, in one or more steps, with the at least one epoxy-functional compound having one or more epoxy group(s) such that a treatment layer comprising the at least one epoxy-functional compound having one or more epoxy group(s) and/or reaction product(s) thereof is formed on the surface of said at least one calcium carbonate-comprising filler material of step a),
   wherein the temperature before and/or during contacting step c) is adjusted such that the at least one compound having one or more epoxy group(s) is in a molten or liquid state.

With regard to the at least one calcium carbonate-comprising filler material, the at least one epoxy-functional compound having one or more epoxy group(s) and preferred embodiments thereof, it is referred to the technical details provided above when defining the surface-treated filler material product.

Step c) of contacting the surface of the at least one calcium carbonate-comprising filler material of step a), under mixing, in one or more steps, with the at least one epoxy-functional compound having one or more epoxy group(s) takes place under mixing conditions. The skilled man will adapt these mixing conditions (such as the configuration of mixing pallets and mixing speed) according to his process equipment.

Preferably, the at least one epoxy-functional compound having one or more epoxy group(s) is added as pure compound, i.e.in the undiluted form.

It is appreciated that the at least one epoxy-functional compound having one or more epoxy group(s) should feature a workable viscosity, i.e. the at least one epoxy-functional compound having one or more epoxy group(s) should be in a molten or in a liquid state.

Thus, it is required that the temperature before and/or during contacting step c) is adjusted such that the at least one epoxy-functional compound having one or more epoxy group(s) is in a molten or liquid state.

In general, contacting step c) is carried out at a treatment temperature of from 20 to 200°C, more preferably of from 40 to 200°C, even more preferably of from 50 to 180°C and most preferably of from 60 to 160°C.

If the at least one epoxy-functional compound having one or more epoxy group(s) is provided in a molten state, it is appreciated that the temperature before and/or during contacting step c) is adjusted such that the temperature is at least 2°C above the melting point of the at least one epoxy-functional compound having one or more epoxy group(s). For example, the temperature before contacting step c) is adjusted such that the temperature is at least 2°C above the melting point of the at least one epoxy-functional compound having one or more epoxy group(s). Alternatively, the temperature before and during contacting step c) is adjusted such that the temperature is at least 2°C above the melting point of the at least one epoxy-functional compound having one or more epoxy group(s).

In one embodiment of the present invention, the temperature before and/or during contacting step c) is adjusted such that the temperature is at least 5°C, preferably, at least 8 °C and most preferably at least 10 °C above the melting point of the at least one epoxy-functional compound having one or more epoxy group(s). For example, the temperature before and/or during contacting step c) is adjusted such that the temperature is from 2 to 50 °C, preferably from 5 to 40 °C, more preferably from 8 to 30 °C and most preferably from 10 to 20 °C above the melting point of the at least one epoxy-functional compound having one or more epoxy group(s).

In one embodiment of the present invention, the contacting of the at least one calcium carbonate-comprising filler material with the at least one epoxy-functional compound having one or more epoxy group(s) is thus carried out at a treatment temperature of below 200°C. For example, the contacting of at least one calcium carbonate-comprising filler material with the at least one epoxy-functional compound having one or more epoxy group(s) is carried out at a treatment temperature of from 20 to 200°C, more preferably of from 40 to 200°C, even more preferably of from 50 to 180°C and most preferably of from 60 to 160°C.

The treatment time for carrying out the contacting of the at least one calcium carbonate-comprising filler material with the at least one epoxy-functional compound having one or more epoxy group(s) is carried out for a period of 30 min or less, preferably for a period of 25 min or less, more preferably for a period of 20 min or less and most preferably from 5 min to 20 min. For example, contacting step c) is carried out for a period of time from 10 to 20 min. In general, the length of contacting the at least one calcium carbonate-comprising filler material with the at least one epoxy-functional compound having one or more epoxy group(s) is determined by the treatment temperature applied during said contacting. For example, where a treatment temperature of about 200 °C is applied, the treatment time is as short as, for example, about 5 min. If a treatment temperature of about 120 or 140 °C is applied, the treatment time can be as long as, for example, about 15 min.

It is appreciated that the at least one epoxy-functional compound having one or more epoxy group(s) is added in contacting step c) in a total amount of from 0.1 to 3 wt.-%, based on the total dry weight of the at least one calcium carbonate-comprising filler material of step a). For example, the at least one epoxy-functional compound having one or more epoxy group(s) is added in contacting step c) in an amount of from 0.2 to 2.8 wt.-% or from 0.3 to 2.5 wt.-%, based on the total dry weight of the at least one calcium carbonate-comprising filler material of step a).

In one embodiment of the present invention, the at least one calcium carbonate-comprising filler material is preheated, i.e. activated, before contacting step c) is carried out. That is to say, the at least one calcium carbonate-comprising filler material is preheated at a temperature of from 20 to 200 °C, preferably of from 40 to 200 °C, more preferably of from 50 to 180 °C and most preferably of from 60 to 160 °C before contacting step c) is carried out.

The treatment time for carrying out the preheating of the at least one calcium carbonate-comprising filler material is carried out for a period of 30 min or less, preferably for a period of 20 min or less and more preferably for a period of 15 min or less.

In one embodiment of the present invention, the preheating of the at least one calcium carbonate-comprising filler material is carried out at a temperature that is of about equal to the temperature implemented during contacting step c).

The term "equal" temperature in the meaning of the present invention refers to a preheating temperature that is at most 20 °C, preferably at most 15 °C, more preferably 10 °C and most preferably at most 5 °C below or above the temperature implemented during contacting step c).

Thus, it is appreciated that the treatment layer formed on the surface of the at least one calcium carbonate-comprising filler material comprises the at least one epoxy-functional compound having one or more epoxy group(s) provided in step b) and/or reaction product(s) thereof obtained as reaction product from contacting the calcium carbonate-comprising filler material with the at least one epoxy-functional compound having one or more epoxy group(s) of step b). In such a case, the treatment layer of the surface treated filler material product preferably further comprises reaction product(s) of the at least one epoxy-functional compound having one or more epoxy group(s) formed on the surface of said at least one calcium carbonate-comprising filler material in step c). For example, reaction product(s) such as one or more calcium salts of the at least one epoxy-functional compound having one or more epoxy group(s).

Additionally, the treatment layer formed on the surface of the at least one calcium carbonate-comprising filler material may further comprise at least one saturated aliphatic linear or branched carboxylic acid and/or reaction products thereof or at least one mono-substituted succinic anhydride and/or reaction products thereof.

With regard to the at least one saturated aliphatic linear or branched carboxylic acid and/or reaction products thereof, at least one mono-substituted succinic anhydride, reaction products thereof and preferred embodiments thereof, it is referred to the technical details provided above when defining the surface-treated filler material product.

Thus, in a preferred embodiment, the process for preparing the surface-treated filler material product comprises at least the steps of:
a) providing at least one calcium carbonate-comprising filler material,
b) providing at least one epoxy-functional compound having one or more epoxy group(s),
c) contacting the surface of the at least one calcium carbonate-comprising filler material of step a), under mixing, in one or more steps, with the at least one epoxy-functional compound having one or more epoxy group(s) such that a treatment layer comprising the at least one epoxy-functional compound having one or more epoxy group(s) and/or reaction product(s) thereof is formed on the surface of said at least one calcium carbonate-comprising filler material of step a), wherein the temperature before and/or during contacting step c) is adjusted such that the at least one compound having one or more epoxy group(s) is in a molten or liquid state., and
d) contacting the at least one calcium carbonate-comprising filler material of step a), under mixing, before, during and/or after step c), in one or more steps, with at least one saturated aliphatic linear or branched carboxylic acid or at least one mono-substituted succinic anhydride.

Step d) of contacting the surface of the at least one calcium carbonate-comprising filler material of step a), under mixing, in one or more steps, with the at least one saturated aliphatic linear or branched carboxylic acid or at least one mono-substituted succinic anhydride takes place under mixing conditions. The skilled man will adapt these mixing conditions (such as the configuration of mixing pallets and mixing speed) according to his process equipment.

Preferably, the at least one saturated aliphatic linear or branched carboxylic acid or at least one mono-substituted succinic anhydride is added as pure compound, i.e.in the undiluted form.

It is appreciated that the at least one saturated aliphatic linear or branched carboxylic acid or at least one mono-substituted succinic anhydride should feature a workable viscosity, i.e. the at least one saturated aliphatic linear or branched carboxylic acid or at least one mono-substituted succinic anhydride should be in a molten or in a liquid state.

Thus, it is required that the temperature before and/or during contacting step d) is adjusted such that at least one saturated aliphatic linear or branched carboxylic acid or at least one mono-substituted succinic anhydride is in a molten or liquid state.

In general, contacting step d) is carried out at a treatment temperature of from 20 to 200°C, more preferably of from 40 to 200°C, even more preferably of from 50 to 180°C and most preferably of from 60 to 160°C.

If the at least one saturated aliphatic linear or branched carboxylic acid or at least one mono-substituted succinic anhydride is provided in a molten state, it is appreciated that the temperature before and/or during contacting step d) is adjusted such that the temperature is at least 2°C above the melting point of the at least one saturated aliphatic linear or branched carboxylic acid or at least one mono-substituted succinic anhydride. For example, the temperature before contacting step d) is adjusted such that the temperature is at least 2°C above the melting point of the at least one saturated aliphatic linear or branched carboxylic acid or at least one mono-substituted succinic anhydride. Alternatively, the temperature before and during contacting step d) is adjusted such that the temperature is at least 2°C above the melting point of the at least one saturated aliphatic linear or branched carboxylic acid or at least one mono-substituted succinic anhydride.

In one embodiment of the present invention, the temperature before and/or during contacting step d) is adjusted such that the temperature is at least 5°C, preferably, at least 8 °C and most preferably at least 10 °C above the melting point of the at least one saturated aliphatic linear or branched carboxylic acid or at least one mono-substituted succinic anhydride. For example, the temperature before and/or during contacting step c) is adjusted such that the temperature is from 2 to 50 °C, preferably from 5 to 40 °C, more preferably from 8 to 30 °C and most preferably from 10 to 20 °C above the melting point of the at least one saturated aliphatic linear or branched carboxylic acid or at least one mono-substituted succinic anhydride.

In one embodiment of the present invention, the contacting of the at least one calcium carbonate-comprising filler material with the at least one saturated aliphatic linear or branched carboxylic acid or at least one mono-substituted succinic anhydride is thus carried out at a treatment temperature of below 200°C. For example, the contacting of at least one calcium carbonate-comprising filler material with the at least one saturated aliphatic linear or branched carboxylic acid or at least one mono-substituted succinic anhydride is carried out at a treatment temperature of from 20 to 200°C, more preferably of from 40 to 200°C, even more preferably of from 50 to 180°C and most preferably of from 60 to 160°C.

It is preferred that process steps c) and d) are carried out at about equal temperatures.

The treatment time for carrying out the contacting of the at least one calcium carbonate-comprising filler material with the at least one saturated aliphatic linear or branched carboxylic acid or at least one mono-substituted succinic anhydride is carried out for a period of 30 min or less, preferably for a period of 25 min or less, more preferably for a period of 20 min or less and most preferably from 5 min to 20 min. For example, contacting step c) is carried out for a period of time from 10 to 20 min.

It is appreciated that the at least one saturated aliphatic linear or branched carboxylic acid or at least one mono-substituted succinic anhydride is added in contacting step d) in a total amount of from 0.1 to 3 wt.-%, based on the total dry weight of the at least one calcium carbonate-comprising filler material of step a). For example, the at least one saturated aliphatic linear or branched carboxylic acid or at least one mono-substituted succinic anhydride is added in contacting step c) in an amount of from 0.2 to 2.8 wt.-% or from 0.3 to 2.5 wt.-%, based on the total dry weight of the at least one calcium carbonate-comprising filler material of step a).

It is appreciated that the advantageous effects of the present invention, i.e. the UV stability, are specifically achieved if the at least one epoxy-functional compound having one or more epoxy group(s) and/or reaction products thereof in the treatment layer on the surface of the at least one calcium carbonate-comprising filler material comprising is/are exposed to the polymer composition in which the surface-treated filler material product is embedded.

Thus, it is preferred that process step d) is carried out before step c).

It is preferred that the surface-treated filler material product obtained by the process of the present invention is in form of a powder. Thus, the process of the present invention is typically carried out without a drying step.

In another aspect the present invention refers to a process for preparing a masterbatch or compound comprising the surface-treated filler material product as defined herein. The process comprises at least the steps of mixing and/or kneading at least one polymeric resin and the surface-treated filler material product to form a mixture and continuously pelletizing the obtained mixture

With regard to the surface-treated filler material product and preferred embodiments thereof, it is referred to the technical details provided above when defining the surface-treated filler material product.

The term "masterbatch" refers to a composition having a concentration of the respective component that is higher than the concentration of the respective component in the instant polymer composition. That is to say, the masterbatch is further diluted such as to obtain the instant polymer composition.

The term "compound" refers to a composition having a concentration of the respective component that is equal to the concentration of the respective component in the instant polymer composition. That is to say, the compound is not necessarily diluted for obtaining the instant polymer composition.

The at least one polymeric resin and the surface-treated filler material product, and, if present, other optional additives, may be mixed and/or kneaded by the use of a suitable mixer, e.g. a Henschel mixer, a super mixer, a tumbler type mixer or the like. The compounding step may be done with a suitable extruder, preferably by a twin screw extruder (co or counter-rotating) or by any other suitable continuous compounding equipment, e.g. a continuous co-kneader (Buss), a continuous mixer (Farrel Pomini), a ring extruder (Extricom) or the like. The continuous polymer mass from extrusion may be either pelletized by (hot cut) die face pelletizing with underwater pelletizing, eccentric pelletizing and water ring pelletizing or by (cold cut) strand pelletizing with underwater and conventional strand pelletizing to form the extruded polymer mass into pellets. Thus, the compound may be in form of pellets, beads, or granules.

Optionally, the compounding step may also be performed with a discontinuous or batch process using an internal (batch) mixer, e.g. a Banburry mixer (HF Mixing Group) or a Brabender mixer (Brabender) or the like.

It is preferred that the at least one polymeric resin comprises polymers obtained from fossil fuels, preferably the at least one polymeric resin is selected from homopolymers and/or copolymers of polyolefins, more preferably from homopolymers and/or copolymers of polyethylene or polypropylene.

According to one embodiment, the at least one polymeric resin is a polyethylene, preferably selected from the group consisting of high density polyethylene (HDPE), linear low density polyethylene (LLDPE), low density polyethylene (LDPE), ultra-low density polyethylene (ULDPE), very low density polyethylene (VLDPE), and mixtures thereof.

The expression homopolymer of polyethylene used in the present invention relates to polyethylene comprising a polyethylene that consists substantially, i.e. of more than 99.7 wt.-%, still more preferably of at least 99.8 wt.-%, based on the total weight of the polyethylene, of ethylene units. For example, only ethylene units in the homopolymer of polyethylene are detectable.

In case the at least one polymeric resin of the polymer composition comprises a copolymer of polyethylene, it is appreciated that the polyethylene contains units derivable from ethylene as major components. Accordingly, the copolymer of polyethylene comprises at least 55 wt.-% units derivable from ethylene, more preferably at least 60 wt.-% of units derived from ethylene, based on the total weight of the polyethylene. For example, the copolymer of polyethylene comprises 60 to 99.5 wt.-%, more preferably 90 to 99 wt.-%, units derivable from ethylene, based on the total weight of the polyethylene. The comonomers present in such copolymer of polyethylene are C3 to C10 α-olefins, preferably 1-butene, 1-hexene and 1-octene, the latter especially preferred.

According to another embodiment, the polymer comprises a polypropylene (PP), for example a PP having a density in the range from 0.890 g/cm³ to 0.910 g/cm³.

The expression homopolymer of polypropylene as used throughout the instant invention relates to a polypropylene that consists substantially, i.e. of more than 99 wt.-%, still more preferably of at least 99.5 wt.-%, like of at least 99.8 wt.-%, based on the total weight of the polypropylene, of propylene units. In a preferred embodiment only propylene units are detectable in the homopolymer of polypropylene.

In case the at least one polymeric resin of the polymer composition comprises a copolymer of polypropylene, the polypropylene preferably contains units derivable from propylene as major components. The copolymer of polypropylene preferably comprises, preferably consists of, units derived from propylene and C2 and/or at least one C4 to C10 α-olefin. In one embodiment of the present invention, the copolymer of polypropylene comprises, preferably consists of, units derived from propylene and at least one α-olefin selected from the group consisting of ethylene, 1-butene, 1-pentene, 1-hexene and 1-octene. For example, the copolymer of polypropylene comprises, preferably consists of, units derived from propylene and ethylene. In one embodiment of the present invention, the units derivable from propylene constitutes the main part of the polypropylene, i.e. at least 60 wt.-%, preferably of at least 70 wt.-%, more preferably of at least 80 wt.-%, still more preferably of from 60 to 99 wt.-%, yet more preferably of from 70 to 99 wt.-% and most preferably of from 80 to 99 wt.-%, based on the total weight of the polypropylene. The amount of units derived from C2 and/or at least one C4 to C10 α-olefin in the copolymer of polypropylene, is in the range of 1 to 40 wt.-%, more preferably in the range of 1 to 30 wt.-% and most preferably in the range of 1 to 20 wt.-%, based on the total weight of the copolymer of polypropylene.

If the copolymer of polypropylene comprises only units derivable from propylene and ethylene, the amount of ethylene is preferably in the range of 1 to 20 wt.-%, preferably in the range of 1 to 15 wt.-% and most preferably in the range of 1 to 10 wt.-%, based on the total weight of the copolymer of polypropylene. Accordingly, the amount of propylene is preferably in the range of 80 to 99 wt.-%, preferably in the range of 85 to 99 wt.-% and most preferably in the range of 90 to 99 wt.-%, based on the total weight of the copolymer of polypropylene.

Preferably, the at least one polymeric resin is selected from homopolymers of polyolefins, more preferably from homopolymers of polyethylene or polypropylene, e.g. homopolymers of polypropylene.

The expression "at least one" polymeric resin means that one or more kinds of polymeric resin may be present in the inventive polymer composition.

Accordingly, it is appreciated that the at least one polymeric resin may be a mixture of two or more kinds of polymeric resins.

In one embodiment of the present invention, the at least one polymeric resin is one kind of polymeric resin.

In one embodiment of the present invention, the at least one polymeric resin has a melting temperature Tm of above 100 °C, more preferably of above 150 °C, like of above 200 °C. For example, the melting temperature of the at least one polymeric resin ranges from 100 to 350 °C, more preferably ranges from 150 to 325 °C and most preferably ranges from 200 to 300 °C.

Furthermore, it is appreciated that the at least one polymeric resin may be selected from polymeric resins having a broad spectrum of melt flow rate. In general, it is preferred that the at least one polymeric resin has a melt flow rate MFR₂ (190 °C, 2.16 kg) measured according to ISO 1133 of from 0.1 to 3 000 g/10 min, more preferably of from 0.2 to 2 500 g/10 min. For example, the at least one polymeric resin has a melt flow rate MFR₂ (190 °C, 2.16 kg) measured according to ISO 1133 of from 0.3 to 2 000 g/10 min or from 0.3 to 1 600 g/10 min. Additionally or alternatively, the at least one polymeric resin has a melt flow rate MFR₂ (230 °C, 2.16 kg) measured according to ISO 1133 of from 0.1 to 3 000 g/10 min, more preferably of from 0.2 to 2 500 g/10 min. For example, the at least one polymeric resin has a melt flow rate MFR₂ (230 °C, 2.16 kg) measured according to ISO 1133 of from 0.3 to 2 000 g/10 min or from 0.3 to 1 600 g/10 min. In one embodiment, the at least one polymeric resin has a melt flow rate MFR₂ (230 °C, 2.16 kg) measured according to ISO 1133 of from 0.5 to 100 g/10 min or from 1.0 to 70 g/10 min.

For example, the at least one polymeric resin is a polypropylene homopolymer having a melt flow rate MFR₂ (230 °C, 2.16 kg) measured according to ISO 1133 of from 0.5 to 100 g/10 min or from 1.0 to 70 g/10 min.

The surface-treated filler material product of the present invention is advantageously implemented in a polymer composition comprising at least one polymeric resin and from 1 to 70 wt.-% of the surface-treated filler material product.

Thus, the present invention refers in a further aspect to a polymer composition comprising at least one polymeric resin and from 1 to 70 wt.-%, based on the total weight of the polymer composition, of the surface-treated filler material product. In one embodiment, the polymer composition comprises at least one polymeric resin and from 1 to 40 wt.-%, and most preferably from 1 to 20 wt.-%, based on the total weight of the polymer composition, of the surface-treated filler material product.

As already mentioned above, the at least one polymeric resin is preferably selected from homopolymers and/or copolymers of polyolefins, preferably homopolymers and/or copolymers of polyethylene or polypropylene and most preferably homopolymers of polypropylene.

According to one embodiment, the polymer composition of the present invention is used for the preparation of polymeric articles, preferably woven bags. Thus, in a further aspect, the present invention refers to a polymeric article comprising the surface-treated filler material product as defined herein and/or the polymer composition as defined herein.

With regard to the definition of the surface-treated filler material product, the polymer composition and preferred embodiments thereof, reference is made to the statements provided above.

Accordingly, the polymeric article comprises the surface-treated filler material product and/or polymer composition of the present invention. Thus, it is preferred that at least a part, preferably the complete polymeric article, comprises the surface-treated filler material product and/or polymer composition of the present invention.

In the art, many processes for the preparation of polymer articles are known. These processes include, without being limited to, extrusion process, co-extrusion process, blown film extrusion process, cast film extrusion, tape extrusion process or sheet extrusion process, extrusion coating process, injection molding process, blow molding process, thermoforming process, and rotomolding.

Thus, the polymeric article of the present invention is preferably processed by extrusion process, co-extrusion process, blown film extrusion process, cast film extrusion, tape extrusion process or sheet extrusion process, extrusion coating process, injection molding process, blow molding process, thermoforming process, or rotomolding.

As already mentioned above, the UV stability of a polymer composition can be significantly improved, i.e. the degradation of the mechanical properties such as tensile properties in a polymeric article comprising the filler material is reduced when exposed to UV light, if the at least one calcium carbonate-comprising filler material comprises a treatment layer on its surface comprising at least one epoxy-functional compound having one or more epoxy group(s) and/or reaction products thereof. Furthermore, such a surface-treated filler material product allows for increasing the filler content in a polymer composition and at the same time provides high UV stability, i.e. a reduced degradation of the mechanical properties when exposed to UV light.

Thus, the present invention refers in a further aspect to the use of the surface-treated filler material product as defined herein to reduce degradation of the mechanical properties in a polymeric article comprising the surface-treated filler material product when exposed to UV light.

With regard to the surface-treated filler material product and preferred embodiments thereof, it is referred to the technical details provided above when defining the surface-treated filler material product.

It is preferred that the surface-treated filler material product especially reduces the degradation of the tensile properties of a polymeric article comprising the surface-treated filler material product when exposed to UV light.

The following examples may additionally illustrate the invention but are not meant to restrict the invention to the exemplified embodiments.

### Examples

### A) Measurement methods

The following measurement methods are used to evaluate the parameters given in the examples and claims.

### Particle size distribution (mass % particles with a diameter < X) and weight median diameter (d₅₀) of a particulate material

As used herein and as generally defined in the art, the "d₅₀" value was determined based on measurements made by using a Sedigraph™ 5100 of Micromeritics Instrument Corporation and is defined as the size at which 50 % (the median point) of the particle mass is accounted for by particles having a diameter equal to the specified value.

The method and the instrument are known to the skilled person and are commonly used to determine grain size of fillers and pigments. The measurement was carried out in an aqueous solution of 0.1 wt.-% Na₄P₂O₇. The samples were dispersed using a high speed stirrer and supersonics.

### BET specific surface area of a material

Throughout the present document, the specific surface area was measured via the BET method according to ISO 9277:2010 using nitrogen, following conditioning of the sample by heating at 250°C for a period of 30 minutes. Prior to such measurements, the sample was filtered within a Büchner funnel, rinsed with deionised water and dried overnight at 90 to 100°C in an oven. Subsequently, the dry cake was ground thoroughly in a mortar and the resulting powder was placed in a moisture balance at 130°C until a constant weight was reached.

### Amount of surface-treatment layer

The amount of the treatment layer on the calcium carbonate-comprising filler material was calculated theoretically from the values of the BET of the untreated calcium carbonate-comprising filler material and the amount of surface treatment agent that was used for the surface-treatment. It is assumed that 100 % of the surface treatment agents added to the calcium carbonate-comprising filler material are present as surface treatment layer on the surface of the calcium carbonate-comprising filler material.

### Melt Flow Rate MFR₂

The melt flow rate MFR₂ (230°C, 2.16 kg) was measured at 230 °C under a load of 2.16 kg according to ISO 1133. Alternatively, the melt flow rate MFR₂ (230°C, 2.16 kg) may be measured according to ASTM D1238. The melt flow Rate MFR₂ (190°C, 2.16 kg) was measured at 190 °C under a load of 2.16 kg according to ISO 1133. Alternatively, the melt flow rate MFR₂ (190°C, 2.16 kg) may be measured according to ASTM D1238.

### Epoxy equivalent weight

The epoxy equivalent weight was determined according to EN ISO 3001.

### Glass transition temperature Tg and melting temperature Tm

The glass transition temperature Tg was measured by dynamic mechanical analysis according to ISO 6721-7. The melting temperature (Tm), was determined by differential scanning calorimeter (DSC) according to ISO 11357.

### Molecular weight (M_{w})

The molecular weight averages (Mw) were determined by Gel Permeation Chromatography (GPC) according to ISO 16014-4:2003 and ASTM D 6474-99.

### Density

The density of polymers was determined according to ISO1183.

### Tensile properties

### a) Examples Test UV2 and Test UV3:

The tensile properties were measured on an Allround Z020 traction device from Zwick Roell. The instruments and the measuring method are known to the skilled person. Measurements were performed with a testing samples of 50 mm x 15 mm, a preload force of 0.2 N and a speed of 500 mm/min. The tensile strain at break was obtained under standard conditions. The max. force is determined from the highest point of the stress-strain curve in the tensile test, i.e. from the ultimate strength point. All measurements were performed on samples that have been stored under similar conditions after preparation.

### b) Examples Test UV1:

The test method corresponds to the test method for Examples Test UV2 and Test UV3 as set out above with the following amendment:
Testing samples: 50 mm x 25 mm
Speed: 100 mm/min
Preload force: 5 N

### B) Preparation of surface-treated filler materials

### Materials used:

### ASA 1

Mono-substituted alkenyl succinic anhydride (2,5-furandione, dihydro-, mono-C₁₅₋₂₀-alkenyl derivs., CAS No. 68784-12-3) is a blend of mainly branched octadecenyl succinic anhydrides (CAS #28777-98-2) and mainly branched hexadecenyl succinic anhydrides (CAS #32072-96-1). More than 80% of the blend is branched octadecenyl succinic anhydrides. The purity of the blend is > 95 wt.-%. The residual olefin content is below 3 wt.-%.

### Fatty acids mixture 2

Fatty acid mixture 2 is a 1:1 mixture of stearic acid and palmitic acid

### Epoxide-containing compound 3:

Epoxide-containing compound 3 is an epoxidized soybean oil produced by Galata Chemicals (Drapex 392)

### Epoxide-containing compound 4:

Epoxide-containing compound 4 is a styrene-glycidyl methacrylate copolymer from BASF (Joncryl ADR4368C)

### Epoxide-containing compound 5:

Epoxide-containing compound 5 is a Poly(ethylene-co-methyl acrylate-co-glycidyl methacrylate) from Sigma-Aldrich

### PPH Repol H305FG

PPH Repol H305FG is a polypropylene homopolymer, available from Repol, under the tradename "H350FG". The polypropylene homopolymer has a melt flow rate (230°C/2.16 kg) as determined according to ISO 1133 of 35 g/10 min.

### Dow PPH H358-02

Dow PPH H358-02 is a polypropylene homopolymer resin, available from the Dow Chemical Company, under the tradename "Dow™ Polypropylene H358-02". The polypropylene homopolymer has a melt flow rate (230°C/2.16 kg) as determined according to ISO 1133 of 2.1 g/10 min and a density determined according to ISO1183 of 0.900 g/cm³.

### Ampacet 11977-N White PE MB

Ampacet 11977-N White PE MB is a masterbatch of a LDPE/LLDPE resin, available from Ampacet Europe S.A., under the tradename "11977-N White PE MB". The resin has a melt flow rate (190°C/2.16 kg) as determined according to ISO 1133 of min. 2 g/10 min.

### UV-MB Additive Masterbatch

UV-MB Additive Masterbatch is a polyethylene masterbatch, available from Deep Plast Industries, as "Additive Masterbatch (U.V MB)". The masterbatch comprises Tinuvin-783 of BASF as UV stabilizer.

### Moplen HP522H

Moplen HP522H is a polypropylene homopolymer, available from LyondellBasell, under the tradename "Moplen HP522H". The polypropylene homopolymer has a melt flow rate (230°C/2.16 kg) as determined according to ISO 1133 of 2.0 g/10 min and a density determined according to ISO1183 of 0.900 g/cm³.

### Calcium carbonate fillers:

### Fillers for Test UV 1:

All surface-treated calcium carbonate samples were prepared with a dry ground calcium carbonate from Turkey (*d*₅₀ = 3 µm, *d*₉₈ = 12.5 µm).

Surface treatments were carried out in a high speed mixer (MTI Mixer, MTI Mischtechnik International GmbH, Germany), and conditioned by stirring for 10 minutes at the treatment temperature (3000 rpm). After that time, the additives were added to the mixture and stirring and heating is then continued for another 20 minutes (3000 rpm). After that time, the mixture is allowed to cool and the powder was collected. In table 1, the materials (additives), amounts and treatment conditions used for preparing the surface-treated calcium carbonate powders for test UV1 are shown.

**Table 1: Preparation of the surface-treated calcium carbonate powders for test UV1**

| Example | Calcium carbonate (amount, kg) | Additive 1 (parts by weight per hundred parts CaCO₃) | Additive 2 (parts by weight per hundred parts CaCO₃) | Treatment temperature |
|---|---|---|---|---|
| Powder CE1 | 1.3 | / | / | |
| Powder CE2 | 1.3 | Fatty acid mixture 2 (0.6) | / | 130 °C |
| Powder E1 | 1.3 | Fatty acid mixture 2 (0.6) | Epoxide-containing compound 3 (0.4) | 140 °C |
| Powder E2 | 1.3 | Fatty acid mixture 2 (0.6) | Epoxide-containing compound 3 (1.0) | 140 °C |
| Powder E3 | 1.3 | Fatty acid mixture 2 (0.6) | Epoxide-containing compound 5 (1.0) | 140 °C |

### Fillers for Tests UV 2 & 3:

All surface-treated calcium carbonate samples were prepared with a dry ground calcium carbonate from Turkey (*d*₅₀ = 3 µm, *d*₉₈ = 12.5 µm).

Surface treatments were carried in a high speed mixer (Somakon MP-LB Mixer, Somakon Verfahrenstechnik, Germany), and conditioned by stirring for 10 minutes at the treatment temperature (1000 rpm). After that time, the additives were added to the mixture and stirring and heating is then continued for another 15 minutes (2000 rpm). After that time, the mixture was allowed to cool and the powder was collected. In table 2, the materials (additives), amounts and treatment conditions used for preparing the surface-treated calcium carbonate powders for tests UV2 and UV3 are shown.

**Table 2: Preparation of the surface-treated calcium carbonate powders for tests UV2 and UV3**

| Example | Calcium carbonate (amount, kg) | Additive 1 (parts by weight per hundred parts CaCO₃) | Additive 2 (parts by weight per hundred parts CaCO₃) | Treatment temperature |
|---|---|---|---|---|
| Powder CE3 | 0.8 | / | / | / |
| Powder CE4 | 0.8 | Fatty acid mixture 2 (0.6) | / | 120 °C |
| Powder E4 | 0.8 | Fatty acid mixture 2 (0.6) | Epoxide-containing compound 3 (0.5) | 120 °C |
| Powder E5 | 0.8 | ASA 1 (0.5) | Epoxide-containing compound 4 (0.8) | 140 °C |
| Powder E6 | 0.8 | Fatty acid mixture 2 (0.6) | Epoxide-containing compound 4 (0.8) | 140 °C |
| Powder E7 | 0.8 | ASA 1 (0.5) | Epoxide-containing compound 3 (0.8) | 120 °C |

### C) Preparation of polypropylene cast films

### Preparation of cast films for Test UV 1:

The preparation of the masterbatches for Test UV 1 was carried out as set out in table 3.

**Table 3: Preparation of the masterbatches for Test UV 1**

| Sample | Polymer (wt.-%) | CaCO₃ (wt.-%) |
|---|---|---|
| MB-CE1 | Dow PPH H358-02 (30%) | CE2 (70%) |
| MB-E1 | Dow PPH H358-02 (30%) | E1 (70%) |
| MB-E2 | Dow PPH H358-02 (30%) | E2 (70%) |
| MB-E3 | Dow PPH H358-02 (30%) | E3 (70%) |

The films were produced on a Dr. Collin cast film line (Extruder Type 30x 30 D, die: 250 mm) with the following line settings:
- Extruder temperatures: 50°C (feeding) - 190°C / 200°C / 230C / 240°C / 240°C
- Pipes temperatures: 240°C / 240°C
- Die temperatures: 240°C / 240°C
- Screw speed: 35rpm
- Chill roll speed: 3.5 - 4.0 m/min
- Die gap: 0.7 - 0.75 mm
- Chill roll temperature: 60°C
- Temperature other rolls: 40°C
- Sieve: 74 µm
- Film thickness: 50 µm ± 2µm

The cast film formulations for the test UV1 are set out in Table 4.

**Table 4: Cast film formulations**

| Cast film ref. | Filler (wt.-%) |
|---|---|
| CE100 | 96% Dow PPH H358-02 + 2% Ampacet 11977-N White PE MB + 2% UV-MB Additive Masterbatch |
| CE101 | 93.7% Dow PPH H358-02 + 2% Ampacet 11977-N White PE MB + 2% UV-MB Additive Masterbatch + 4.3% MB-CE2 |
| CE102 | 83.7% Dow PPH H358-02 + 2% Ampacet 11977-N White PE MB + 2% UV-MB Additive Masterbatch + 14.3% MB-CE2 |
| E101 | 93.7% Dow PPH H358-02 + 2% Ampacet 11977-N White PE MB + 2% UV-MB Additive Masterbatch + 4.3% MB-E1 |
| E102 | 83.7% Dow PPH H358-02 + 2% Ampacet 11977-N White PE MB + 2% UV-MB Additive Masterbatch + 14.3% MB-E1 |
| E103 | 83.7% Dow PPH H358-02 + 2% Ampacet 11977-N White PE MB + 2% UV-MB Additive Masterbatch + 14.3% MB-E2 |
| E104 | 83.7% Dow PPH H358-02 + 2% Ampacet 11977-N White PE MB + 2% UV-MB Additive Masterbatch + 14.3% MB-E3 |

### Preparation of cast films for Test UV 2:

The preparation of the masterbatches for Test UV2 was carried out as set out in table 5.

**Table 5: Preparation of the masterbatches for Test UV 2**

| Sample | Polymer (wt.-%) | CaCO₃ (wt.-%) |
|---|---|---|
| MB-CE4 | PPH Repol H305FG (50%) | CE4 (50%) |
| MB-CE5 | PPH Repol H305FG (50%) | CE5 (50%) |
| MB-E4 | PPH Repol H305FG (50%) | E4 (50%) |
| MB-E5 | PPH Repol H305FG (50%) | E5 (50%) |
| MB-E6 | PPH Repol H305FG (50%) | E6 (50%) |

The films were produced on a Dr. Collin cast film line (Extruder Type 30x 30 D, die: 250 mm) with the following line settings:
- Extruder temperatures: 50°C (feeding) - 190°C / 200°C / 230C / 240°C / 240°C
- Pipes temperatures: 240°C / 240°C
- Die temperatures: 240°C / 240°C
- Screw speed: 35 rpm
- Chill roll speed: 3.5 - 4.0 m/min
- Die gap: 0.7 - 0.75 mm
- Chill roll temperature: 60°C
- Temperature other rolls: 40°C
- Sieve: 74 µm
- Film thickness: 50 µm ± 2 µm

The cast film formulations for the test UV2 are set out in Table 5.

**Table 6: Cast film formulations**

| Cast film ref. | Filler (wt.-%) |
|---|---|
| CE103 | 96% PPH Repol H305FG + 2% Ampacet 11977-N White PE MB + 2% UV-MB Additive Masterbatch |
| CE104 | 90% PPH Repol H305FG + 2% Ampacet 11977-N White PE MB + 2% UV-MB Additive Masterbatch + 6% MB-CE4 |
| CE105 | 76% PPH Repol H305FG + 2% Ampacet 11977-N White PE MB + 2% UV-MB Additive Masterbatch + 20% MB-CE4 |
| CE106 | 76% PPH Repol H305FG + 2% Ampacet 11977-N White PE MB + 2% UV-MB Additive Masterbatch + 20% MB-CE5 |
| E105 | 76% PPH Repol H305FG + 2% Ampacet 11977-N White PE MB + 2% UV-MB Additive Masterbatch + 20% MB-E4 |
| E106 | 76% PPH Repol H305FG + 2% Ampacet 11977-N White PE MB + 2% UV-MB Additive Masterbatch + 20% MB-E5 |
| E107 | 76% PPH Repol H305FG + 2% Ampacet 11977-N White PE MB+ 2% UV-MB Additive Masterbatch + 20% MB-E6 |

### Preparation of cast films for Test UV 3:

The preparation of the masterbatches for Test UV3 was carried out as set out in table 7.

**Table 7: Preparation of the masterbatches for Test UV 3**

| Sample | Polymer (wt.-%) | CaCO3 (wt.-%) |
|---|---|---|
| MB-CE4 | PPH Repol H305FG (50%) | CE4 (50%) |
| MB-CE5 | PPH Repol H305FG (50%) | CE5 (50%) |
| MB-E7 | PPH Repol H305FG (50%) | E7 (50%) |

The films were produced on a Dr. Collin cast film line (Extruder Type 30x 30 D, die: 250 mm) with the following line settings:
- Extruder temperatures: 50°C (feeding) - 190°C / 200°C / 230°C / 240°C / 240°C
- Pipes temperatures: 240°C / 240°C
- Die temperatures: 240°C / 240°C
- Screw speed: 35 rpm
- Chill roll speed: 3.5 - 4.0 m/min
- Die gap: 0.7 - 0.75mm
- Chill roll temperature: 60°C
- Temperature other rolls: 40°C
- Sieve: 74 µm
- Film thickness: 50 µm ± 2µm

The cast film formulations for the test UV3 are set out in Table 8.

**Table 8: Cast film formulations**

| Cast film ref. | Filler (wt%) |
|---|---|
| CE107 | 92% Moplen HP522H + 2% UV-MB Additive Masterbatch + 6% MB-CE4 |
| CE108 | 78% Moplen HP522H + 2% UV-MB Additive Masterbatch + 20% MB-CE4 |
| CE109 | 78% Moplen HP522H + 2% UV-MB Additive Masterbatch + 20% MB-CE5 |
| E108 | 78% Moplen HP522H + 2% UV-MB Additive Masterbatch + 20% MB-E7 |

### D) UV stability tests

### Example Test UV1:

In this test, the UV stability of the films is tested according to EN ISO21898. UV exposure is carried out using UVB-313 lamps (0.71 W/m²) for a total of 200 h in 25 cycles of 8 h UV light at 60 °C and 4 h condensation in the dark at 50 °C.

### Test samples:

- Width: 25 mm
- Height: 50 mm (between the clamps)
- Thickness: 50 µm
- Testing speed: 100 mm/min
- Preload force: 5N

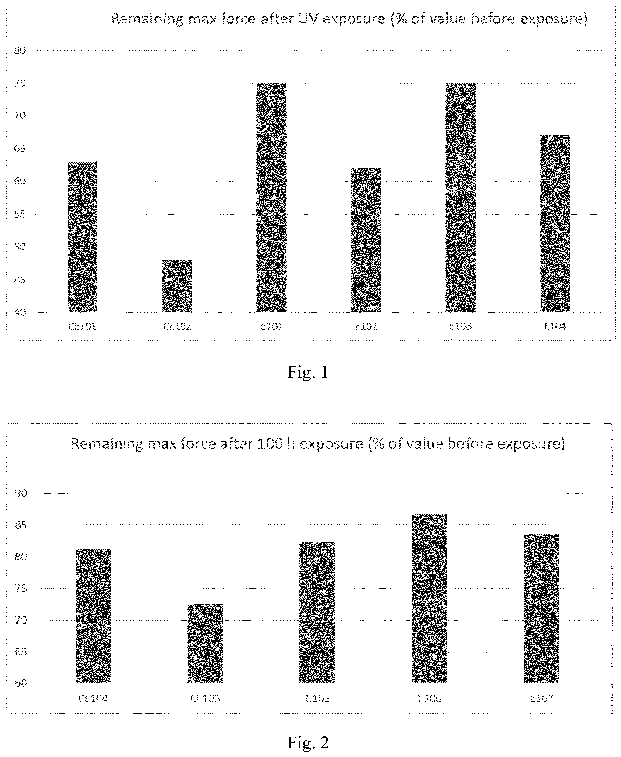

Tensile properties in machine direction were measured before and after UV exposure. The remaining maximal force after UV exposure, expressed in % of the maximal force of non-exposed samples is summarized in Table 9 and Fig. 1.

**Table 9: Tensile properties after UV exposure for test UV1**

| Cast Film Sample | Filler (wt.-%) | Remaining max force after UV exposure (% of value before exposure) |
|---|---|---|
| CE101 | 3% CE2 | 63 |
| CE102 | 10% CE2 | 48 |
| E101 | 3% E1 | 75 |
| E102 | 10% E1 | 62 |
| E103 | 10% E2 | 75 |
| E104 | 10% E3 | 67 |

It can be gathered that the co-treatment of a filler material with a fatty acid and a surface-treatment agent having at least one epoxy-functional compound having one or more epoxy group(s) and/or reaction products thereof increases the remaining maximum force after UV exposure.

### Example Test UV2:

In this test, the UV stability of the films is tested according to EN ISO21898:2004 Annex A. UV exposure is carried out in a Q-UV oven from Q-lab using UVB-313 lamps (0.71 W/m²) for a total of 100 and 200 h in cycles of 8 h UV light at 60 °C and 4 h condensation in the dark at 50 °C.

### Test samples :

- Width: 15 mm
- Height: 50 mm
- Thickness: 50 µm
- Speed: 500mm/min
- Preload: 0.2N

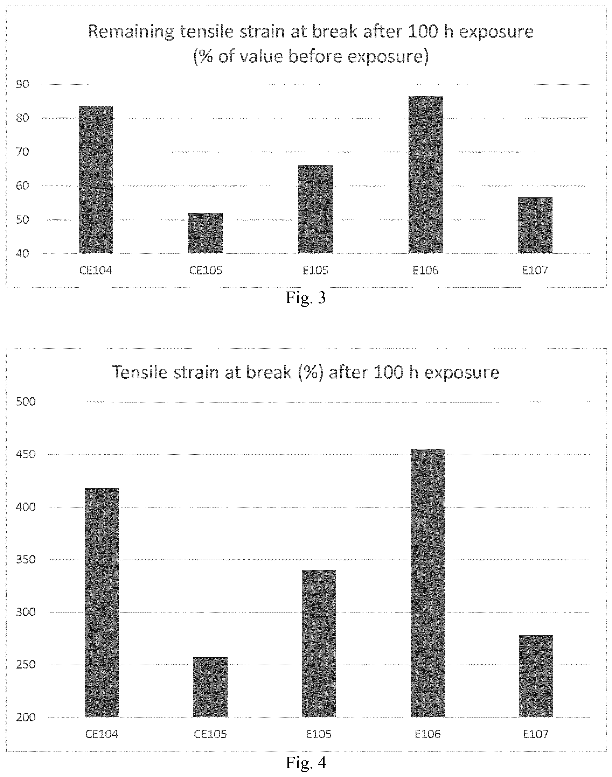

Tensile properties in machine direction were measured before and after UV exposure on an Allround Z020 traction device from Zwick Roell. The remaining maximal force after UV exposure, expressed in % of the maximal force of non-exposed samples, the tensile strain at beak as well as the remaining tensile strain at break are summarized in Table 10 and Fig. 2 to 4.

**Table 10: Tensile properties after UV exposure for test UV2**

| Cast film sample | Filler (wt.-%) | Max force after 100 h exposure (N) | Remaining max force after 100 h exposure (% of value before exposure) | Tensile strain at break (%) after 100 h exposure | Remaining tensile strain at break after 100 h exposure (% of value before exposure) |
|---|---|---|---|---|---|
| CE104 (film 2) | 3% CE4 | 42.8 | 81.2 | 418 | 83.5 |
| CE105 (film 3) | 10% CE4 | 30.6 | 72.5 | 257 | 51.9 |
| E105 (film 8) | 10% E4 | 31.0 | 82.3 | 340 | 66.1 |
| E106 (film 15) | 10% E5 | 33.5 | 86.7 | 455 | 86.4 |
| E107 (film 7) | 10% E6 | 29.9 | 83.6 | 278 | 56.6 |

It can be gathered that the co-treatment of a filler material with a fatty acid or ASA and a surface-treatment agent having at least one epoxy-functional compound having one or more epoxy group(s) and/or reaction products thereof increases the remaining maximum force or tensile strain at break after UV exposure.

### Example Test UV3:

In this test, the weathering test is carried out in a Q-UV oven from Q-lab using UVB-313 lamps (0.71 W/m²) for a total of 160 h in cycles of 8 h UV light at 60 °C and 4 h condensation in the dark at 50 °C.

### Test samples:

- Width: 15 mm
- Height: 50 mm
- Thickness: 50 µm
- Speed: 500 mm/min
- Preload: 0.2N

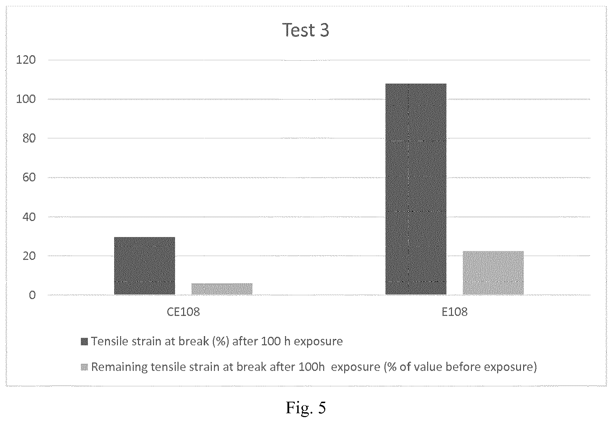

Tensile properties in machine direction were measured before and after UV exposure on an Allround Z020 traction device from Zwick Roell. The remaining maximal force after UV exposure, expressed in % of the maximal force of non-exposed samples is summarized in Table 11 and Fig. 5.

**Table 11: Tensile properties after UV exposure for test UV3**

| Cast Film Sample | Filler (wt.-%) | Tensile strain at break (%) after 100 h exposure | Remaining tensile strain at break after 100 h exposure (% of value before exposure) |
|---|---|---|---|
| CE108 (film 3bis) | 10% CE4 | 29.5 | 6.1 |
| E108 (film 8) | 10% E7 | 108 | 22.5 |

It can be gathered that the treatment of a filler material with a mono-substituted alkenyl succinic anhydride and a surface-treatment agent having at least one epoxy-functional compound having one or more epoxy group(s) and/or reaction products thereof increases the remaining tensile strain at break after UV exposure compared to a fatty acid treatment.

## Claims

1. A surface-treated filler material product, wherein the surface-treated filler material product comprises
A) at least one calcium carbonate-comprising filler material having
- a weight median particle size *d*₅₀ in the range from 0.1 µm to 7 µm,
- a top cut particle size *d*₉₈ of ≤ 50 µm,
and
B) a treatment layer on the surface of the at least one calcium carbonate-comprising filler material comprising at least one epoxy-functional compound having one or more epoxy group(s) and/or reaction products thereof,
wherein the surface-treated filler material product comprises the treatment layer in an amount of from 0.1 to 3 wt.-%, based on the total dry weight of the at least one calcium carbonate-comprising filler material.

2. The surface-treated filler material product of claim 1, wherein the at least one calcium carbonate-comprising filler material is selected from the group consisting of ground calcium carbonate, preferably marble, limestone, and/or chalk, precipitated calcium carbonate (PCC), preferably vaterite, calcite and/or aragonite, surface-reacted calcium carbonate (MCC) and mixtures thereof, more preferably the calcium carbonate-comprising filler material is ground calcium carbonate.

3. The surface-treated filler material product of claim 1 or 2, wherein the at least one calcium carbonate-comprising filler material has
a) a weight median particle size *d*₅₀ value in the range from 0.25 µm to 5 µm and most preferably from 0.5 µm to 4 µm, and/or
b) a top cut (*d*₉₈) of ≤ 40 µm, more preferably ≤ 25 µm and most preferably ≤ 15 µm, and/or
c) a specific surface area (BET) of from 0.5 to 150 m²/g, preferably from 0.5 to 50 m²/g, more preferably from 0.5 to 35 m²/g and most preferably from 0.5 to 10 m²/g, measured using nitrogen and the BET method according to ISO 9277.

4. The surface-treated filler material product of any one of claims 1 to 3, wherein the at least one epoxy-functional compound having one or more epoxy group(s) is a compound selected from
i) an epoxy-functional aliphatic linear or branched carboxylic acid having a total amount of carbon atoms from C8 to C24, preferably an epoxy-functional aliphatic linear or branched carboxylic acid having one to three epoxy group(s), and/or
ii) an epoxy-functional triglyceride comprising derivatized linolenic acid such as α-linolenic acid or γ-linolenic acid, linoleic acid and/or oleic acid, preferably epoxy-functional triglyceride comprising derivatized linoleic acid.

5. The surface-treated filler material product of any one of claims 1 to 4, wherein the at least one epoxy-functional compound having one or more epoxy group(s) is selected from epoxy-functional vegetable oils, such as epoxy-functional soybean oil or epoxy-functional linseed oil, epoxy-functional octyl tallate, epoxy-functional octadeca-7,9-dienoic acid and esters thereof, and mixtures thereof.

6. The surface-treated filler material product of any one of claims 1 to 3, wherein the at least one epoxy-functional compound having one or more epoxy group(s) is selected from an epoxy-functional styrene-(meth)acrylic oligomer or polymer, an epoxy-functional ethylene-(meth)acrylic oligomer or polymer and 1,5-epoxy resins.

7. The surface-treated filler material product of claim 6, wherein the epoxy-functional styrene-(meth)acrylic oligomer or polymer
i) is the polymerization product of (i) at least one epoxy-functional (meth)acrylic monomer; and (ii) at least one styrene monomer and optionally (meth)acrylic monomer, and/or
ii) has an average number of three to five, preferably an average number of four, epoxy groups per oligomer or polymer chain, and/or
iii) has an epoxy equivalent weight of from about 180 to about 2800 g/mol, and/or
iv) a glass transition temperature Tg in the range from -50 to +60°C, and/or
v) a molecular weight (Mw) in the range from 1 000 to 9 000 g/mol.

8. The surface-treated filler material product of claim 6, wherein the epoxy-functional ethylene-(meth)acrylic oligomer or polymer
i) is the polymerization product of (i) at least one epoxy-functional (meth)acrylic monomer; and (ii) at least one ethylene monomer and optionally (meth)acrylic monomer, and/or
ii) has a melting temperature Tm in the range from 25 to 50°C, and/or
iii) comprises epoxy-functional (meth)acrylic monomers in an amount ranging from 4 to 18 wt.-%, preferably from 5 to 12 wt.-% and most preferably from 6 to 10 wt.-%, based on the total weight of the epoxy-functional ethylene-(meth)acrylic oligomer or polymer, and/or
iv) comprises (meth)acrylic monomers in an amount ranging from 12 to 40 wt.-%, preferably from 15 to 38 wt.-% and most preferably from 18 to 25 wt.-%, based on the total weight of the epoxy-functional ethylene-(meth)acrylic oligomer or polymer.

9. The surface-treated filler material product of any one of claims 1 to 8, wherein the treatment layer on the surface of the at least one calcium carbonate-comprising filler material further comprises at least one saturated aliphatic linear or branched carboxylic acid and/or reaction products thereof or at least one mono-substituted succinic anhydride and/or reaction products thereof.

10. A process for preparing a surface-treated filler material product according to any one of claims 1 to 9, the process comprising at least the steps of:
a) providing at least one calcium carbonate-comprising filler material,
b) providing at least one epoxy-functional compound having one or more epoxy group(s),
c) contacting the surface of the at least one calcium carbonate-comprising filler material of step a), under mixing, in one or more steps, with the at least one epoxy-functional compound having one or more epoxy group(s) such that a treatment layer comprising the at least one epoxy-functional compound having one or more epoxy group(s) and/or reaction product(s) thereof is formed on the surface of said at least one calcium carbonate-comprising filler material of step a),
wherein the temperature before and/or during contacting step c) is adjusted such that the at least one compound having one or more epoxy group(s) is in a molten or liquid state.

11. The process of claim 10, wherein the at least one calcium carbonate-comprising filler material of step a) is preheated before contacting step c) is carried out, preferably the at least one calcium carbonate-comprising filler material of step a) is preheated at a temperature of from 20 to 200°C, more preferably of from 40 to 200°C, even more preferably of from 50 to 180°C and most preferably of from 60 to 160°C.

12. The process of claim 10 or 11, wherein contacting step c) is carried out at a temperature of from 20 to 200°C, more preferably of from 40 to 200°C, even more preferably of from 50 to 180°C and most preferably of from 60 to 160°C.

13. The process of any one of claims 10 to 12, wherein the process further comprises a step d) of contacting the at least one calcium carbonate-comprising filler material of step a), under mixing, before, during and/or after step c), preferably before step c), in one or more steps, with at least one saturated aliphatic linear or branched carboxylic acid or at least one mono-substituted succinic anhydride.

14. Process for preparing a masterbatch or compound comprising a surface-treated filler material product according to any one of claims 1 to 9, the process comprising at least the steps of mixing and/or kneading at least one polymeric resin, preferably selected from homopolymers and/or copolymers of polyolefins, more preferably polyethylene or polypropylene, and the surface-treated filler material product to form a mixture and continuously pelletizing the obtained mixture.

15. A polymer composition comprising at least one polymeric resin and from 1 to 70 wt.-%, preferably 1 to 40 wt.-%, and most preferably 1 to 20 wt.-%, based on the total weight of the polymer composition, of a surface-treated filler material product according to any one of claims 1 to 9.

16. The polymer composition according to claim 15, wherein the at least one polymeric resin is selected from homopolymers and/or copolymers of polyolefins, preferably polyethylene or polypropylene.

17. Polymeric article, preferably processed by extrusion process, co-extrusion process, blown film extrusion process, cast film extrusion, tape extrusion process or sheet extrusion process, extrusion coating process, injection molding process, blow molding process, thermoforming process, or rotomolding, comprising a surface-treated filler material product according to any one of claims 1 to 9 and/or a polymer composition according to claim 15 or 16.

18. Use of a surface-treated filler material product according to any one of claims 1 to 9 to reduce degradation of the mechanical properties in a polymeric article comprising the surface-treated filler material product when exposed to UV light.
